# EUROPEAN PATENT SPECIFICATION

(11) **EP 2 901 231 B1**
(45) Date of publication and mention of the grant of the patent: **27.05.2020**
(21) Application number: 13840266.4
(22) Date of filing: 20.09.2013
(51) Int. Cl.: H02J 3/14, H02J 13/00, H04B 3/54, H02B 1/00

(54) **AUTOMATIC LOCAL ELECTRIC MANAGEMENT SYSTEM**
AUTOMATISCHES LOKALES ELEKTRISCHES VERWALTUNGSSYSTEM
SYSTÈME DE GESTION ÉLECTRIQUE LOCAL AUTOMATIQUE

(30) Priority: 26.09.2012 US 201261744366 P; 10.09.2013 US 201314023409
(43) Date of publication of application: 05.08.2015
(73) Proprietor: Chen, Hongxia, Palmyra, VA 22963 (US)
(72) Inventor: Chen, Hongxia, Palmyra, VA 22963 (US)
(74) Representative: Grünecker Patent- und Rechtsanwälte PartG mbB
(86) International application number: PCT/US2013/060908
(87) International publication number: WO 2014/052193

(56) References cited:
- WO-A1-2008/061321
- WO-A2-2005/040992
- US-A1- 2005 052 808
- US-A1- 2007 010 916
- US-A1- 2008 277 945
- US-A1- 2010 094 475
- US-A1- 2010 152 912
- US-A1- 2010 225 167
- US-A1- 2012 065 787
- US-B2- 8 275 486

## Description

### FIELD OF THE INVENTION

The present invention relates generally to the field of electric power management, and more specifically, to systems and methods for automatically managing and controlling local electric systems.

### BACKGROUND

Residential electric systems are conventionally connected to the electric utility grid via the service panel. The utility grid is wired to the main entry of the service panel. The circuit breakers on the service panel are wired between the household electric outlets and the main entry of the service panel. Since all the connections are hardwired, to install a new backup power supply or a renewable energy electric system, a subservices panel, transfer switch, and additional wiring are required. This additional hardware required increases the equipment and installation cost of installing a new backup power supply or a renewable energy electric system.

Because all the connections in such residential electric systems are hardwired, current residential grid tie renewable electric systems cannot be used effectively. (A grid tie renewable electric system links to the utility grid to feed excess capacity back to the utility grid.) For example, when there is a power outage, a grid tie photovoltaic (PV) system has to be shut down to prevent islanding regardless whether it is generating electricity or not. (Islanding occurs when electricity from the PV system is fed to the utility grid when power from the utility grid is not available. Islanding is dangerous to utility workers who may be working on the utility grid.) This is not very effective way of using the PV system.

Because all of the connections in such residential electric systems are hardwired, it is difficult to monitor and control the energy usage and to improve energy efficiency. Energy efficiency could be improved with the implementation of a Smart Grid, but because of upfront cost and some other issues, few smart grids have been installed.

WO 2005/040992 discloses an intelligent power management system that includes a circuit breaker containing a PLC module that spans open contacts of the circuit breaker to provide a communication path for PLC messages between the line and load sides of the circuit when the contacts are open. It further comprises a distribution panel receiving power from the utility routed through a main breaker and a plurality of circuit breakers towards loads, wherein the circuit breakers protect against current overload.

US 2010/152912 A1 discloses power management devices to be introduced in a wall socket for interfacing with a load. The device autonomously opens a relay if the current is below a standby level, thereby disconnecting the load.

WO 2008/061321 A1 discloses an arrangement including an AC meter, wherein if the AC voltage is below a certain value, the customer is disconnected or the utility notified of a possible fault.

US 2012/065787 A1 discloses regular connection and disconnection of loads.

US 2005/052808 A1 discloses a solid state power control device for controlling each phase of a three-phase electrical load to switch on at a zero-crossing point of a corresponding phase of the voltage supplied by a three-phase power source.

The object of the present invention is to provide an improved local electric management system.

This object is solved by the subject-matter of the independent claims.

Embodiments of the present invention are defined by the dependent claims.

### BRIEF SUMMARY OF THE INVENTION

An automatic local electric management system of the present disclosure comprises a main power bus, a main switch, and a plurality of program controlled circuit breakers. The main power bus is adapted to receive electric power from an electrical grid via a main incoming power line. The main switch is electrically connected to the main power bus and adapted to be electrically connected to the main incoming power line. The main switch is configured to selectively open and close to respectively disconnect and connect the main power bus from/to the main incoming power line in response to one or more commands from a controller. The plurality of program controlled circuit breakers are electrically connected to the main power bus. Each program controlled circuit breaker (PCCB) comprises at least an AC switch configured to selectively open or close in response to one or more commands from a controller. Each PCCB is adapted to connect to a corresponding one of a plurality of electric branch lines to distribute electric power from the main power bus to one or more electric loads electrically connected to the electric branch lines. The opening and closing of the AC switch of the corresponding PCCB respectively disconnects and connects the corresponding electric branch line from/to the main power bus.

The system may further comprise a controller in communication with the main switch and each PCCB. The controller may be configured to send one or more commands to the main switch to cause the main switch to selectively open and close. The controller may further be configured to send one or more commands to any one or more PCCB to cause the AC switch of the one or more PCCB to selectively open and close.

The system may further comprise a communications interface adapted to enable information transmission between the controller and one or more appliances electrically connected to one or more of the plurality of electric branch lines through power line communication (PLC) or wireless communication. The communications interface may be connected to the main power bus or connected to one or more of the plurality of electric branch lines to enable PLC signals to be sent to and/or received from at least one of a PLC-capable appliance, connector, or plug electrically connected to at least one of the plurality of electric branch lines. The communications interface may be further adapted to enable information transmission between the controller and at least one of a remote server, remote computer, or mobile device.

The system may further comprise one or more current sensors adapted to be electrically connected to respective ones of the plurality of electric branch lines and in communication with the controller. The controller may be configured to monitor electric power consumption on one or more electric branch lines via the one or more current sensors. The controller may be configured to determine if electric power consumption on any one of the electric branch lines indicates that there are no electric loads on that electric branch line that are powered on. If the controller determines that electric power consumption on any one of the electric branch lines indicates that there are no electric loads on that electric branch line that are powered on, the controller may be further configured to open the AC switch of the PCCB corresponding to that electric branch line to disconnect that electric branch line from the main power bus.

The system may further comprise a sensor electrically connected to the main power bus and configured to detect whether electric power is present or not present on the main power bus and thereby detect whether electric power is present or not present on the main power line, the sensor being in communication with the controller. The sensor may be further electrically connected to each PCCB and configured to monitor electric power consumption on each electric branch line. The sensor may be further configured to detect on over-voltage condition or an under-voltage condition on the main power bus, and the sensor may be further configured to monitor electric power consumption on the main power bus.

The sensor may be a first sensor, and the system may further comprise a second sensor adapted to be electrically connected to the main power line and in communication with the controller. The controller may be adapted to receive an indication from the first sensor whether electric power is present or not present on the main power line. If the controller receives an indication from the first sensor that electric power is present on the main power line, the controller may be configured for disabling the second sensor or disconnecting the second sensor from the main power bus. If the controller receives an indication from the first sensor that electric power is not present on the main power line, the controller may be configured for enabling the second sensor or connecting the second sensor to the main power line. When the second sensor is enabled or connected to the main power line, the second sensor may be configured to detect a return of electric power to the main power line and to notify the controller that electric power has returned to the main power line.

If electric power is not present on the main power line, the controller may be configured to open the main switch to electrically disconnect the main power line from the main power bus. If a full capacity backup electrical power system is in place, the controller may be further configured to connect the full capacity backup electrical power system to the main power bus. If electric power returns to the main power line, the controller may be further configured to disconnect the full capacity backup electrical power system from the main power bus and close the main switch to electrically connect the main power line to the main power bus.

If a partial capacity backup electrical power system is in place, the controller may be further configured to (a) determine which one or more electrical loads can be powered by the partial capacity backup electrical power system, (b) open one or more AC switches to disconnect the one or more electrical branch lines corresponding to one or more electrical loads that cannot be powered by the partial capacity backup electrical power system, and (c) connect the partial capacity backup electrical power system to the main power bus. The controller may be further configured to open one or more AC switches to disconnect the one or more electrical branch lines corresponding to one or more electrical loads that cannot be powered by the partial capacity backup electrical power system further based on one or more user-defined priorities. If electric power returns to the main power line, the controller may be further configured to disconnect the partial capacity backup electrical power system from the main power bus, close the main switch to electrically connect the main power line to the main power bus, and close any open AC switches.

If a grid tie renewable energy system is in place, the controller may be further configured to (a) determine how much electrical power is being produced by the grid tie renewable energy system, (b) determine which one or more electrical loads can be powered by the grid tie renewable energy system based on the determination of how much electrical power is being produced by the grid tie renewable energy system, (c) open one or more AC switches to disconnect the one or more electrical branch lines corresponding to one or more electrical loads that cannot be powered by the grid tie renewable energy system based on the determination of how much electrical power is being produced by the grid tie renewable energy system, and (d) connect the grid tie renewable energy system to the main power bus. The controller may be further configured to open one or more AC switches to disconnect the one or more electrical branch lines corresponding to one or more electrical loads that cannot be powered by the grid tie renewable energy system further based on one or more user-defined priorities. If electric power returns to the main power line, the controller may be further configured to disconnect the grid tie renewable energy system from the main power bus, close the main switch to electrically connect the main power line to the main power bus, close any open AC switches, and connect the grid tie renewable energy system to the main power bus.

If a partial capacity backup electrical power system is in place, the controller may be further configured to disconnect and connect one or more predetermined electrical loads at predetermined time intervals to enable an increased number of electrical loads to receive electrical power at least.

Each PCCB may further comprise a current sensor adapted to be electrically connected to the electric branch line and a control circuit in communication with the current sensor and the AC switch, the current sensor and control circuit configured to detect over-current on the electric branch line, the control circuit configured to open the AC switch when over-current is detected on the electric branch line.

The controller may be adapted to be in communication with a sensor configured to detect over-current on one or more electric branch lines. The controller may be configured to send one or more commands to one or more PCCB to cause the AC switch of the one or more PCCB to open when over-current is detected on the corresponding electric branch line.

At least one PCCB may further comprise a current sensor adapted to be electrically connected to the corresponding electric branch line and configured to detect over-current on the corresponding electric branch line. The controller may be adapted to be in communication with the current sensor. The controller may be configured to send one or more commands to the at least one PCCB to cause the AC switch of the at least one PCCB to open when over-current is detected on the corresponding electric branch line.

A program controlled circuit breaker of the present disclosure comprises an AC switch, a current sensor, and a control circuit. The AC switch is adapted to be electrically connected between a main power bus of an electrical control panel and an electric branch line to distribute electric power from the main power bus to one or more electric loads electrically connected to the electric branch line. The AC switch is configured to selectively open or close in response to one or more commands from a controller. The opening and closing of the AC switch of the corresponding PCCB respectively disconnects and connects the corresponding electric branch line from/to the main power bus. The current sensor is adapted to be electrically connected to the electric branch line. The control circuit is in communication with the current sensor and the AC switch. The current sensor and control circuit are configured to detect over-current on the electric branch line. The control circuit is configured to open the AC switch when over-current is detected on the electric branch line.

A program controlled circuit breaker of the present disclosure comprises an AC switch, and a current sensor. The AC switch is adapted to be electrically connected between a main power bus of an electrical control panel and an electric branch line to distribute electric power from the main power bus to one or more electric loads electrically connected to the electric branch line. The AC switch is configured to selectively open or close in response to one or more commands from an external controller. The opening and closing of the AC switch of the corresponding PCCB respectively disconnects and connects the corresponding electric branch line from/to the main power bus. The current sensor is adapted to be electrically connected to the electric branch line. The current sensor and the AC switch are adapted to be in communication with the external controller. The current sensor is configured to detect over-current on the electric branch line. The AC switch is adapted to receive one or more commands from the external controller when over-current is detected on the electric branch line and to open when the one or more commands are received.

A program controlled circuit breaker of the present disclosure comprises an AC switch adapted to be electrically connected between a main power bus of an electrical control panel and an electric branch line to distribute electric power from the main power bus to one or more electric loads electrically connected to the electric branch line. The AC switch is configured to selectively open or close in response to one or more commands from an external controller. The opening and closing of the AC switch of the corresponding PCCB respectively disconnects and connects the corresponding electric branch line from/to the main power bus. The AC switch is adapted to be in communication with the external controller and with a current sensor electrically connected to the electric branch line and configured to detect over-current on the electric branch line. The AC switch is adapted to receive one or more commands from the external controller when over-current is detected on the electric branch line and to open when the one or more commands are received.

In addition to the automatic local electric management system as described above, other features of the present dislcosure are directed to corresponding methods for automatic local electric management.

### BRIEF DESCRIPTION OF THE SEVERAL VIEWS OF THE DRAWING(S)

The accompanying drawings, which are incorporated in and constitute part of this specification, together with the description, serve to explain the principles of the systems and methods of the present disclosure. Reference is made herein to the accompanying drawings, which are not necessarily drawn to scale, and wherein:
Figure 1 illustrates the operating environment of the present disclosure.
Figure 2 is a block diagram of a Smart Connector circuit, in accordance with the present disclosure.
Figure 3 is a block diagram of the circuits of an Intelligent Service Panel (ISP) shown in Figure 1, in accordance with the present disclosure.
Figure 4 is a block diagram of a program controlled circuit breaker panel (PCCBP) shown in Figure 3, in accordance with the present disclosure.
Figure 5 is a block diagram of the program controlled circuit breaker (PCCB) shown in Figure 4, in accordance with the present disclosure.
Figure 6 is another possible block diagram of the PCCB shown in Figure 4, in accordance with the present disclosure.
Figure 7 is another possible block diagram of the PCCB shown in Figure 4, in accordance with the present disclosure.
Figure 8 is another possible block diagram of the PCCB shown in Figure 15, in accordance with the present disclosure.
Figure 9 is a perspective external view of a first exemplary structure of an ISP using the PCCB shown in Figure 5, or 6, or 7 in accordance with the present disclosure.
Figure 10 is a perspective internal view of the ISP shown in Figure 9.
Figure 11 is a back view of the ISP shown in Figure 9.
Figure 12 is a perspective external view of a second exemplary structure of an ISP using the PCCB shown in Figure 5, or 6, or7.
Figure 13 is a perspective external view with the front cover open of a third exemplary structure of an ISP using PCCB shown in Figure 8.
Figure 14 is a perspective internal view of the ISP shown in Figure 13.
Figure 15 is a block diagram of a second controlled circuit breaker panel (PCCBP) shown in Figure 3, in accordance with the present disclosure.
Figure 16 is a block diagram of an Automatic Local Electric Management System operation software structure.
Figure 17 is an expanded view of the Real Time Monitor & Control software operation block shown in Figure 16.
Figure 18 is a flow chart of the Grid Control & Power Management module shown in Figure 17.
Figure 19 is a flow chart of the Task Scheduler module shown in Figure 17.
Figure 20 is a flow chart of the Task Dispatcher module shown in Figure 17.
Figure 21 is a flow chart of the Host Request Handler module shown in Figure 17.
Figure 22 is a flow chart of the Endpoint Request Handler module shown in Figure 17.
Figure 23 is an expanded view of the System Management software operation block shown in Figure 16.
Figure 24 is a flow chart of User Request Handler module shown in Figure 23.
Figure 25 is an exemplary Match table that specifies the address of appliances in the local electric system.
Figure 26 is an exemplary Local Power Source table that provides information regarding the local electric generator and/or renewable energy electric system.
Figure 27 is an exemplary Priority table that lists the appliances to be provided with backup power supply if the grid has problems.
Figure 28 is an exemplary User Schedule table that contains user scheduled tasks.

### DETAILED DESCRIPTION

The following detailed description is merely exemplary in nature. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the teachings of the disclosure and are not intended to limit the scope of the invention, which is defined by the claims. For purposes of description herein, the terms "top," "bottom," "left," "rear," "right," "front," "vertical," "horizontal," and derivatives thereof shall relate to features of the apparatus, systems and methods of the present disclosure as oriented in the figures. Furthermore, there is no intention to be bound by any expressed or implied theory presented in the preceding technical field, background, or brief summary, or in the following detailed description. It is also to be understood that the specific devices and processes illustrated in the attached drawings, and described in the following specification, are merely exemplary. Hence, specific dimensions and other physical characteristics disclosed herein are not to be considered as limiting, unless the claims expressly state otherwise.

Objectives of the present invention include to provide an easy and inexpensive way for consumers to more efficiently use energy, to reduce the equipment and installation costs of a local electric generator or renewable energy electric system, to enable a local grid tie renewable energy system to be used more effectively, to provide a cost effective platform for smart homes, and to provide a bottom up solution for Smart Grids.

To achieve these goals, the teachings of the present disclosure provide systems and methods to automatically monitor, control, and manage the local electric power system. Core components of the present disclosure include an Intelligent Service Panel (ISP) and system operation software. A smart connector is not required; however, since a smart connector enables traditional appliances to be monitored and controlled individually, a smart connector may enhance the monitor and control capability in examples of the present disclosure. As used herein, the term "appliance" refers to any device that draws an electrical load, including but not limited to electrical outlets, lighting, typical household appliances (stove, oven, dishwasher, washing machine, clothes dryer, etc.), HVAC (heating ventilation, air conditioning) components, water heaters, etc.

The teachings of the present disclosure serve to solve the above-described problems of conventional local residential electric systems by automatically monitoring and controlling the connection of the grid, branch power lines, and appliances to the local electric system. This dynamic power connection reconfiguration capability eliminates the need for a subservices panel, a transfer switch, and additional wiring that would be required when installing a backup power supply or a renewable energy electric system. This significantly reduces the equipment and installation costs. Although examples of this disclosure are described herein in relation to residential electric systems, they are not limited to use in residential electric systems. It is also possible to use them in commercial or industrial electric systems.

Teachings of the present disclosure will also enable grid tie renewable energy electric systems to be used more effectively. When there is a problem on the grid, instead of shutting down the grid tie renewable energy system, the grid will be disconnected, thereby allowing the local renewable energy system to continue to operate as backup power supply. This makes renewable energy system more attractive.

Systems, methods and apparatus incorporating the teachings of the present disclosure can monitor energy consumption and control the power connections locally or remotely without the need for infrastructure support, but can be easily integrated into the Smart Grid. Teachings of the present disclosure thereby provide an easy and effective bottom up solution for the implementation of Smart Grids.

Since power line communication may be embedded in local power distribution systems, teachings of the present disclosure also provide a more cost effective platform for smart homes. Teachings of the present disclosure enable smart appliances to be integrated easily into automatic local electric systems.

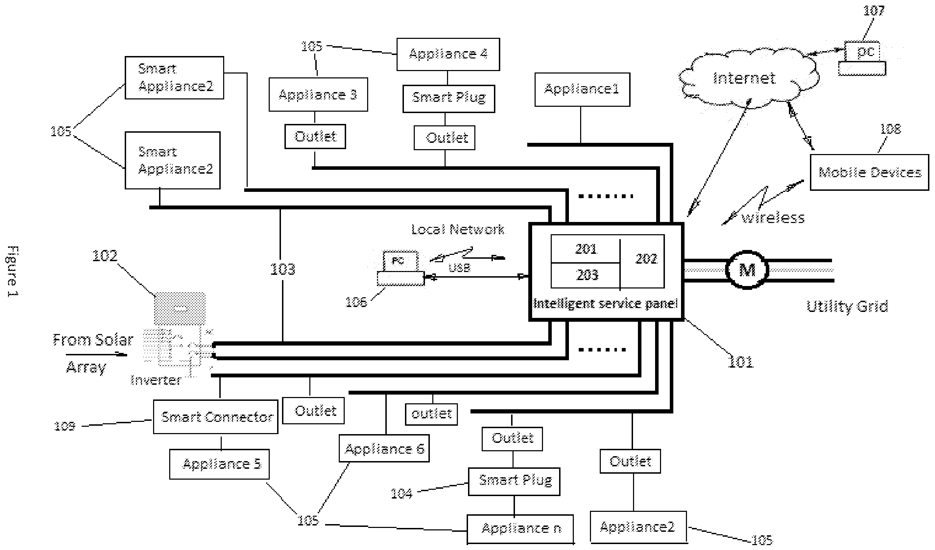

Figure 1 is a representation of an exemplary Automatic Local Electric Management System in which teachings of the present disclosure might be implemented. In Figure 1, the power from the utility grid and the local electric generator, such as grid tie PV system 102, are fed into the Intelligent Service Panel (ISP) 101 and distribute power to the local loads 105 (appliance 1, appliance2, etc.). The ISP 101 automatically monitors the condition of the local electric system, controls the power connections, and dynamically distributes power to the loads according to different situations. The communication features embedded in the ISP 101 enable it to communicate with appliances, local computers, mobile devices, and a remote server. In Figure 1, the branch power lines 103 not only carry power but typically carry power line communication information as well.

ISP 101 comprises a Central Control Unit 201, a program controlled circuit breaker panel (PCCBP) 202, and Interface Unit 203. The Central Control Unit 201 monitors the grid and local electric condition through PCCBP 202 (all described in more detail below). The Central Control Unit 201 may comprise a microprocessor, dedicated or general purpose circuitry (such as an application-specific integrated circuit or a field-programmable gate array), a suitably programmed computing device, or any other suitable means for controlling the operation of the ISP 101. ISP 101 uses Interface Unit 203 to communicate with local computer 106, remote server 107, mobile devices 108, the grid, local renewable energy electric system 102 (such as grid tie PV system in this Figure 1), local loads 105, and any other desired devices. Communication between the ISP 101 and local PC may be via a hardwired connection (e.g., USB) or a wireless connection (e.g., Bluetooth, Wi-Fi, etc.). Communication between the ISP 101 and remote server 107 may be via the internet or any other suitable communication network. Communication between the ISP 101 and mobile device 108 may be via a mobile communication network, the internet, or any other suitable communication network.

The ISP 101 monitors and controls the local electric system at branch power lines 103. Therefore depending on how appliances are connected to the power lines, appliances could be monitored and controlled individually or as a group. For example, in Figure 1, smart appliance 1 and appliance 6 (which does not have to be a smart appliance because appliances with heavy loads can be monitored and controlled individually) represent heavy load appliances, such as a heat pump, water heater, etc. Because a dedicated branch power line is wired to a heavy load, the heavy load appliances can be monitored and controlled individually. In other situations, several appliances are wired to the same branch power line. For example, a ceiling light would share a branch power line with several wall outlets. Appliance 6, in Figure 1, is an example of this type of appliance. In this situation, appliances are monitored and controlled as a group. To monitor and control these appliances individually a Smart Connector 109 could be used to connect the appliance to the branch power line, such as appliance 5 shown in Figure 1. Of course, this assumes that the appliances contain no intelligent features. If smart appliances with power line communication capability are used, the ISP 101 will be able to communicate directly to such smart appliances, and therefore monitor and control them individually.

A Smart Plug 104 can be used in situations where the appliance is connected to the branch power via a wall outlet (e.g., appliance 4 is connected to the branch power line when it is plugged into a smart plug 104 as shown in Figure 1). Smart plugs 104 with a power line or wireless communication feature are commercially available. Such smart plugs can be added to the local electric system anytime by simply connecting to a wall outlet and interfacing them to the ISP 101. Since Smart Connectors 109 have to be wired into the branch power lines 103, it is recommended having a qualified professional to install such smart connectors.

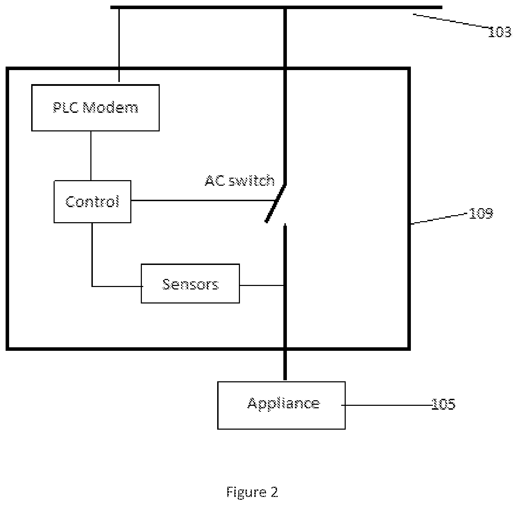

Figure 2 shows a block diagram of a smart connector circuit. The Smart Connector 109 is wired to a branch power line 103, and an appliance 105 is plugged into the Smart Connector 109. The Smart Connector 109 includes a control unit, sensors, an AC switch, and a Power line Communication (PLC) modem. The Smart Connector 109 communicates with the ISP 101 through the PLC modem. The power consumption of the appliance is regularly sampled by the sensors and sent to the ISP 101. The AC switch can either be controlled directly by ISP 101 through the PLC or by a scheduled task that is specified by a user and stored by a local microprocessor.

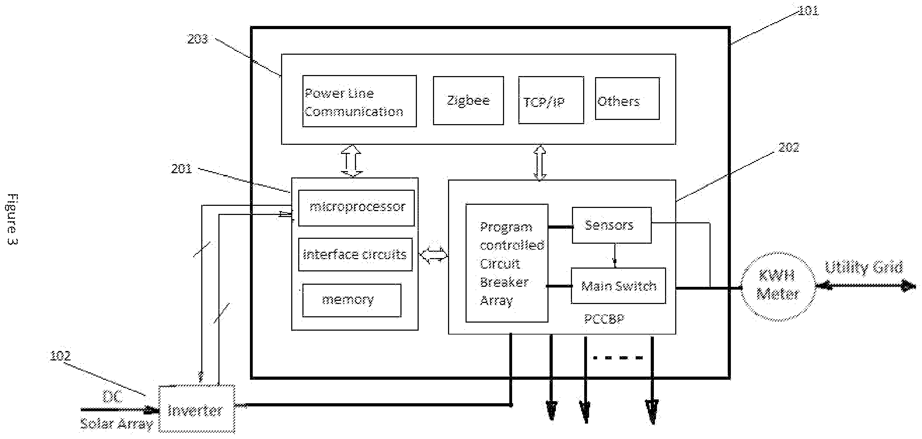

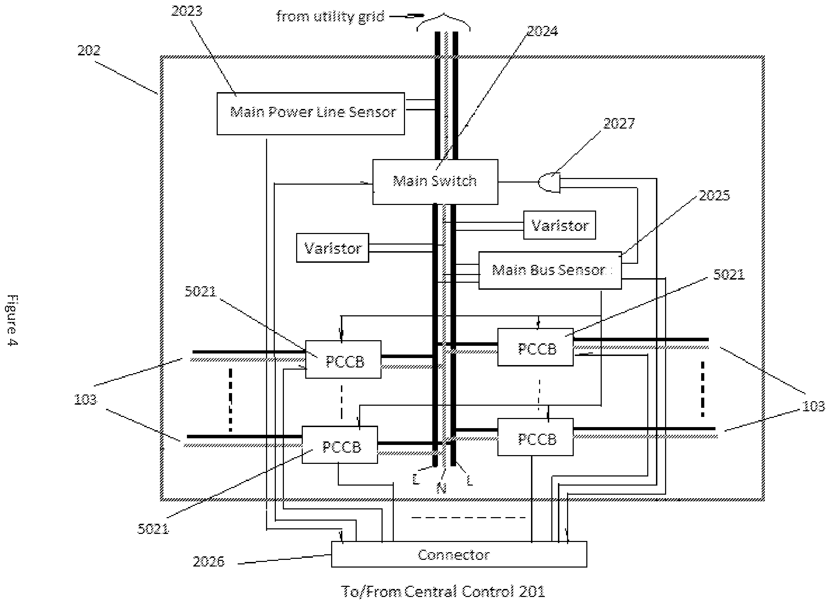

Figure 3 shows a block diagram of the ISP 101. The Central Control Unit 201 includes a microprocessor (or microcontroller), dedicated or general purpose circuitry (such as an application-specific integrated circuit or a field-programmable gate array), and memory (which could be RAM, Flash or similar devices for storing data and instructions). PCCBP 202 may include a program controlled circuit breaker array, a main AC switch, and numerous sensors. The Interface Unit 203 provides functionality that allows the ISP 101 to communicate with smart appliances using power line or wireless communication. The Interface Unit 203 also allows local computers, mobile devices, and the remote server to access the ISP 101, using any suitable communication technology and/or means, whether hardwired or wireless, including but not limited to such as Zigbee, TCP/IP, Bluetooth, etc. These functionalities are achieved by using both hardware and software. The ISP 101 is connected to the utility grid through a KWH (kilowatt hour) meter. The ISP is also connected to AC power coming from an inverter receiving DC power from a solar array.
A block diagram of an exemplary BCCBP 202 is shown in Figure 4. The utility grid connects to the local electric system through Main Switch 2024 to main entry of the PCCBP 202. Through an array of program controlled circuit breakers (PCCB) 5021, the main power is divided into several branch power lines 103 and distributed to appliances. The two varistors placed at just downstream of the Main Switch 2024 will protect against transient over voltage of the power system. Two sensors are placed before and after the Main Switch 2024 respectively. Main Power Line Sensor 2023 is used when the utility grid is disconnected from the local electric system for monitoring the grid return. Main Power Line Sensor 2023 may comprise any suitable type of sensor that can detect grid activity, such as a voltage sensor or frequency sensor. Therefore, during the normal operation, Main Power Line Sensor 2023 can be disabled to save energy, while Main Bus Sensor 2025 monitors the local electric system and grid condition. Main Bus Sensor 2025 may comprise a voltage sensor alone or a voltage sensor and any other suitable type of sensors that can monitor the electrical activity on the main power bus, such as a frequency or temperature sensor. The status of the local electric system and grid condition (such as the voltage and frequency) detected by the Main Bus Sensor 2025 are sent to Central Control Unit 201 via Connector 2026. Any abnormality detected by these sensors can open the Main Switch 2024 and all the branch PCCBs on the panel either directly or through Central Control Unit 201. Whether the Main Switch 2024 or one or more of the branch PCCBs should be opened when an abnormal condition is detected will depend on the type of fault and local electric system configuration. This can be programmed at the system setup. After the Main Switch 2024 is opened, the Main Power Line Sensor2023 will be enabled to monitor the grid condition. Once the grid power is return and back to normal, the Main Switch will be closed and the Main Power Line Sensor 2023 will be disabled again. By controlling the order in which the grid tie renewable energy electric system and appliances connect to PCCBP 202 after the grid returns, the grid tie renewable energy electric system can quickly synchronize with the grid and a temporary overload of the grid can be prevented because not all of the appliances are connected at the same time. PCCBP 202 and Central Control Unit 201 communicate through Connector 2026.

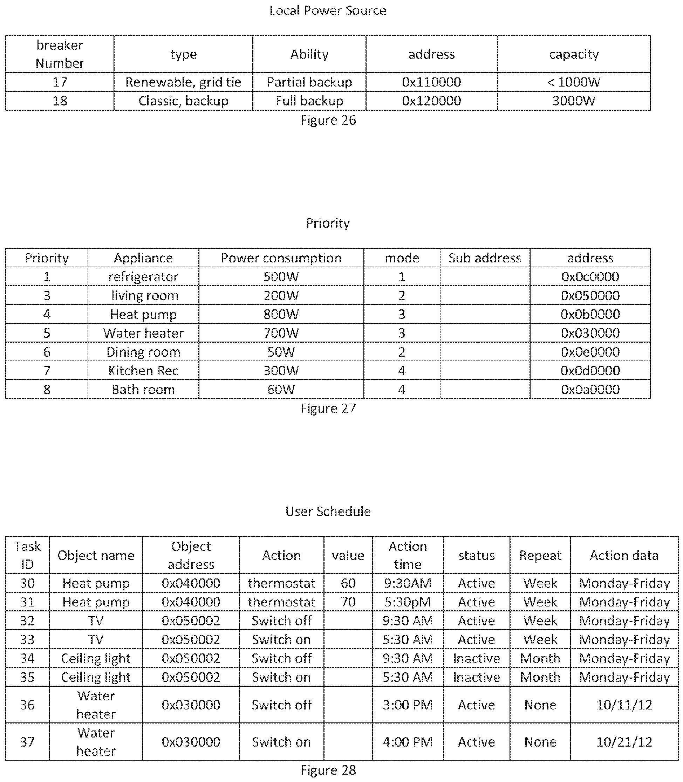

As shown in Figure 4, Main Switch 2024 can be controlled by Central Control Unit 201, and Main Bus Sensor 2025 through logic gate 2027. The type and configuration of logic gate 2027 may vary depending on the arrangement among Main switch 2024, Central Control Unit 201, and Main Bus Sensor 2025. Main Switch 2024 is normally closed. If no local electric generator or grid tie renewable energy electric system is installed, then at system setup the control from Main Bus Sensor 2025 to the main switch can be disabled. Therefore, for local electric system without any backup power supply, the main switch will remain closed and no additional action will be taken by the ISP 101 when a power outage happens. If a classical electric generator with full backup capacity is installed, then when the fault on the grid is detected, Main Switch 2024 will be opened by the sensors to disconnect the grid from the local electric system, and the local electric generator will be connected to PCCBP 202 to provide backup power. If a grid tie renewable energy electric system is installed, then after Main Switch 2024 is opened by the Main Bus Sensor 2025 to isolate the local electric system from the grid, all except a few selected appliances will be disconnected from PCCBP 202 after the power outage. The appliances that will be provided with backup power are determined by the available power from renewable energy electric system and the list of appliances in the Priority table shown in Figure 27.

Dynamically controlling the selected appliances to a power supply will reduce installation cost. The sub service panel, transfer switch, and additional wiring that would be required for installing a grid tie renewable energy electric system or other backup power supplies are no longer required. So grid tie renewable energy electric systems with backup batteries are more affordable with the ISP. This is important because, in theory, when the grid connects to the ISP, the grid tie PV system will be able to provide backup power with or without batteries. But in practice the system is more stable if batteries are included since they will smooth out any fluctuations that exist in the PV system caused by variations in the weather.

Shown in Figure 4, the voltage of the local electric system is monitored by Main Bus Sensor 2025. The current of branch circuits are monitored by the current sensor in each PCCB 5021. The current sensors send branch current reading to Central Control Unit 201 and trip the AC switch of the corresponding PCCB 5021 if over current occur. If no appliance on the branch is in operation, that branch can be disconnected to reduce standby power consumption. With communication features employed in Interface Unit 203, the ISP 101 can directly communicate with smart appliances, monitor their power consumption, and control their thermostat or switches. When Smart Connectors or Smart Plugs are used in the local electric system, the ISP 101 not only can remotely monitor and control appliances through the Smart Connectors or Smart Plugs, but the ISP 101 can program the Smart Connectors or Smart Plugs to turn appliances that are attached to the Smart Connectors or Smart Plugs on or off at a scheduled time. Appliances can be programmed to run when the electric rate is low to reduce the consumer's electricity cost and help reduce stress on the grid during peak hours.

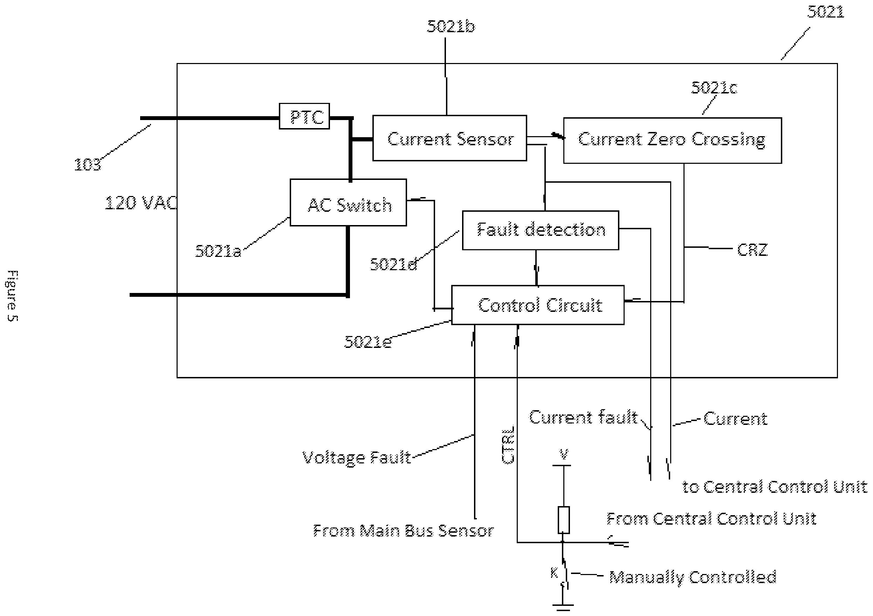

Figures 5, 6, and 7 illustrate three examples PCCB that may be used in the PCCBP of Figure 4. In Figure 5, PCCB 5021 comprises AC switch 5021a, Current Sensor 5021b, Current Zero Crossing 5021c, Current Fault Detection 5021d, and control 5021e. AC switch 5021a is normally closed. The sensed current value and status of the PCCB of Figure 5 are sent to the Central Control Unit 201. Current Zero Crossing generates a CRZ signal with rising edge at current cross zero. When over-current is detected, a current fault signal is generated by Current Fault detection 5021d. As illustrated, Current Fault detection 5021d may be separate from Current Sensor 5021b and Control Circuit 5021e. Alternatively, Current Fault detection 5021d may be integral with Current Sensor 5021b or may be integral with Control Circuit 5021e. At control 5021e, the current fault is synchronized with CRZ and used to open AC switch 5021a. The AC switch 5021a is also controlled by Voltage Fault signal from Main Bus Sensor 2025, and CTRL signal from either Central Control Unit 201 or a mechanical switch or button K. For the transient over-current, the PCCB of Figure 5 is protected by an over-current limiting device, such as a positive temperature coefficient device (PTC). Even though in Figure 5 the Fault detection circuit is drawn separately from the sensor, this does not mean the Fault detection circuit has to be separated from the Current Sensor. Rather, the fault detection may be included in the Current Sensor.

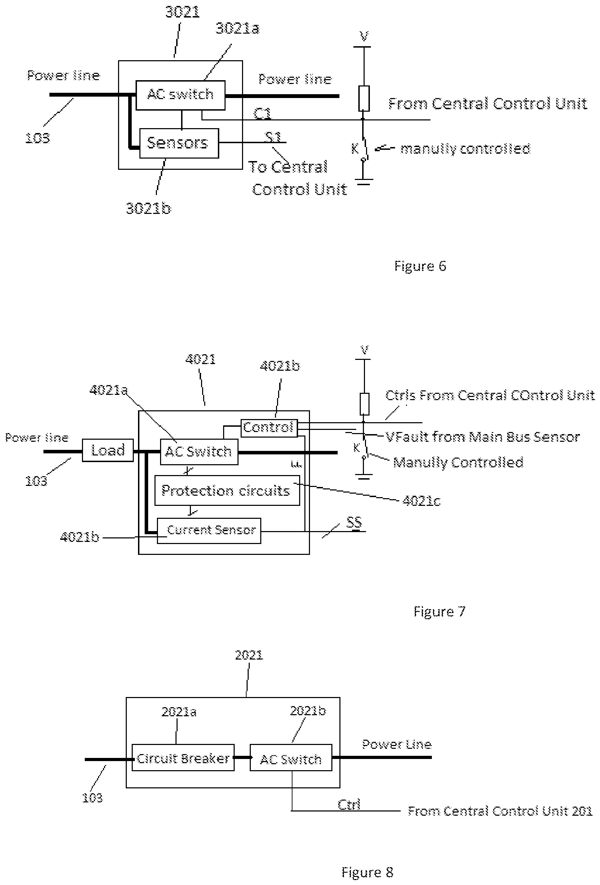

Figure 6 shows another example PCCB. In this topology, PCCB 3021 of Figure 6 includes a sensor 3021b and an AC switch or relay 3021a. When the over-voltage/current on the power line 103 is detected by sensor 3021d, the sensor 3021d will automatically trip the AC switch 3021a. The AC switch or relay 3021a can also be controlled automatically by the microprocessor or manually through a mechanical switch or button k.

Figure 7 illustrates another example of the PCCB. PCCB 4021 of Figure 7 comprises an AC switch 4021a, sensors 4021b, components for circuit protection 4021c, and control circuit 4021d. Ctrls is a signal that either comes from Central Control Unit 201, or manually from mechanical switch or button k. VFault is the voltage fault signal generated by Main Bus Sensor 2025, F is the current fault signal generated by current sensor 4021b. SS are signals sent from sensors 4021b to Central Control Unit 201. When over current occur on the branch power line 103, the circuit protection components 4021c will absorb transient over-current, meanwhile, sensors 4021b will generate signal F to trip the AC switch 4021a. When over voltage occur, the VFault signal generated by Main Bus Sensor 2025 trips the AC switch 4021a to protect the branch power line.

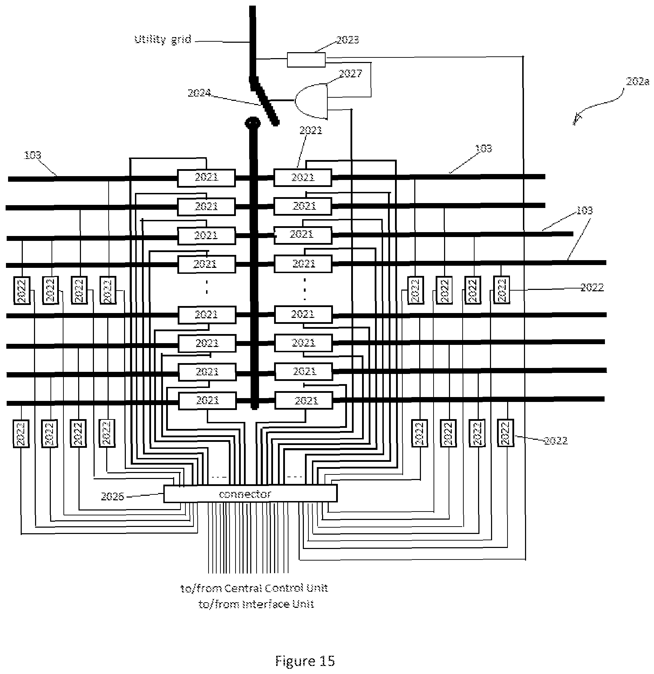

Figure 8 illustrates another example of the PCCB 2021 used in the second example of PCCBP shown in Figure 15. PCCB 2021 of Figure 8 comprises a traditional circuit breaker 2021a and an AC switch or relay 2021b connected in serial. The circuit breakers 2021a provides over-voltage and short-circuit protection while the AC switch or relay 2021b can be automatically controlled by the Central Control Unit 201 through a control pin. The components in Figure 8 can reside within an enclosure or be used separately.

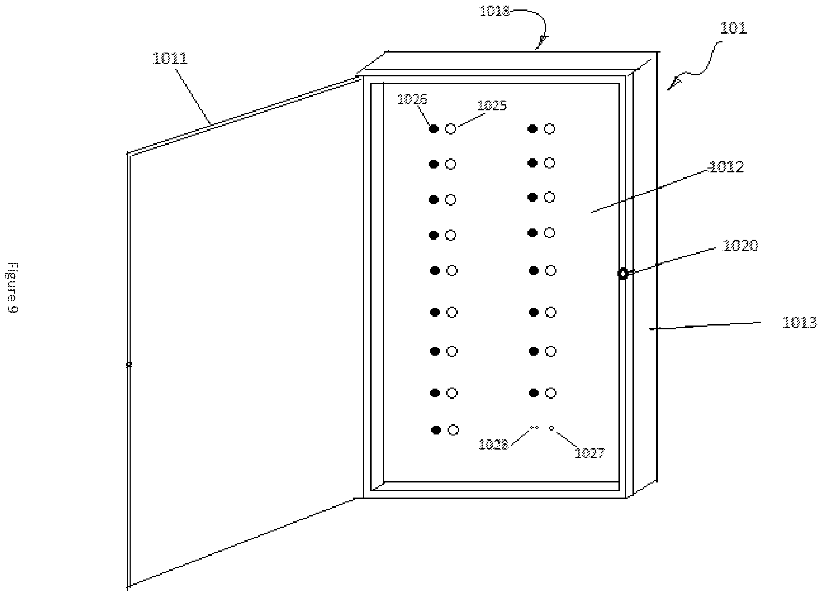

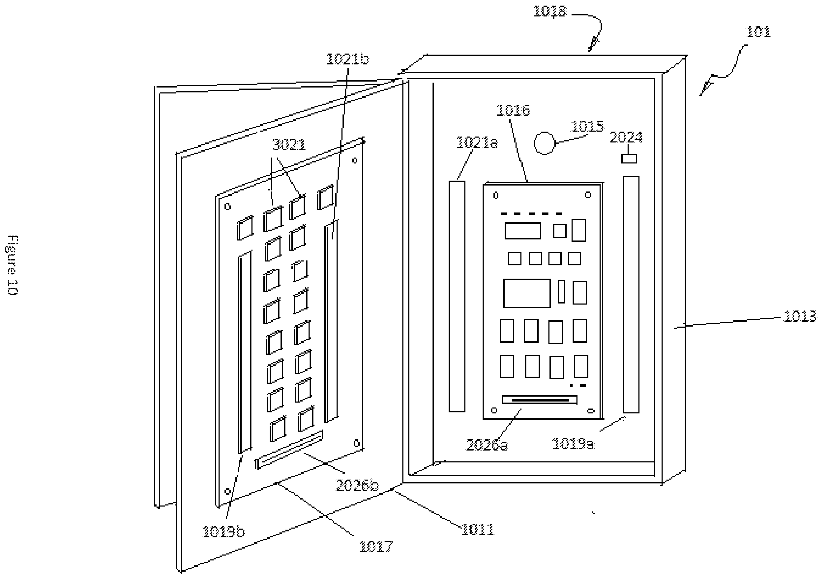

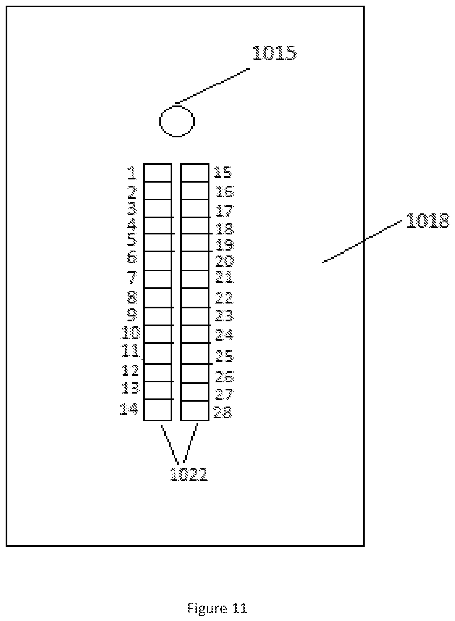

Figures 9 and 10 show an external and internal perspective view, respectively, of an exemplary structure of the ISP 101. Here, PCCB 3021 is used on the PCCBP 202 shown in Figure 4 (although PCCB 5021 or PCCB 4021 may be alternatively used). Figure 11 is the external back view of the example of Figure 9 and 10 (i.e., facing a wall upon which ISP 101 is mounted). From the outside, ISP 101 looks like a box including a front cover 1011, middle panel 1012, frame 1013, and back wall 1018. Front cover 1011 is just a cover. A latch or lock 1020 secures middle panel 1012 in a closed position for safety. On the front surface of middle panel 1012, components 1025 and 1026 represent control buttons (1025) for PCCBs 3021 (which are mounted on circuit board 1017 on the back of middle panel 1012) and indicator lights (e.g., LEDs) (1026) that display the status of the PCCBs 3021. Each one of buttons 1025 is connected to control pin C1 (shown in Figure 6) on the corresponding PCCB 3021. Buttons 1025 and indicator lights 1026 come out of the front surface of middle panel 1012 through holes 1027 and 1028 respectively (only one set of holes in the bottom right corner are shown without the corresponding button 1025 and indicator lights 1026 mounted therein) and are mounted on the other side of circuit board 1017.

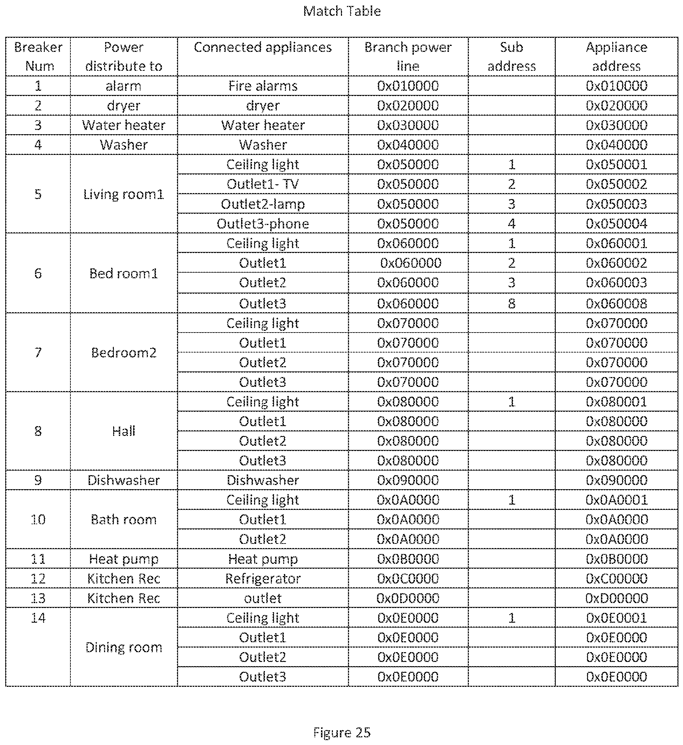

In Figure 10, circuit board 1016 on the inside of back wall 1018 may be used for the Central Control and Interface Unit or the grid monitor and control features described in the PCCBP section. Components 1015, 1019, 1021, (on the inside of back wall 1018) and 1022 (on the outside of back wall 1018) shown in Figures 10 and 11 are the connectors for bringing main power into the ISP box, and sending out branch power lines to the appliances. Connector 1019 and 1021 are multiple pin connectors. Connector 1019 comprises socket 1019a and head 1019b. Connector 1021 comprises socket 1021a and head 1021b. On the outside surface of back wall 1018, there are connectors 1015 and 1022 as is shown in Figure 9. Main power from the utility grid will be input into the box using connector 1015. Inside the box, connector 1015 is wired to one end of Main Switch 2024. The other end of the main switch is connected to the pins on the socket of the connector 1019a on circuit board 1016. The pins on the socket of the connector 1021a are connected to the pins on connector 1022. On circuit board 1017, the pins on the head of connector 1019b are connected to one end of the PCCBs 3021, the other end of the PCCBs 3021 are connected to the pins on the head of the connector 1021b. When the middle panel 1012 is closed, 1019b and 1021b will be plugged into 1019a and 1021a respectively. Therefore the utility power goes into the box through connector 1015 and then through Main Switches 2024. From Main Switch 2024, the power is connected to branch PCCBs 3021 through connector 1019. The branch power from the branch PCCBs 3021 then exits the box through connector 1021 and 1022. The numbers beside each of the connectors 1022 indicate the address of the branch power lines connected to each one. The connectors 1015, 1019, and 1021 in Figure 10 and 11 are for exemplary demonstration only. The shape, numbers, and locations of these connectors may vary in a real application environment. During system installation, branch power that exits the ISP box is connected to the local electric system through connectors 1022. When configuring the system, information on the appliances connected to the corresponding connectors 2022 will be needed for the Match table shown in Figure 25. This table will be used later as a reference to monitor and control the branch power lines. Signals between board 1017 and 1016 are connected through Connector 2026. Connector 2026 comprises socket 2026a and head 2026b..

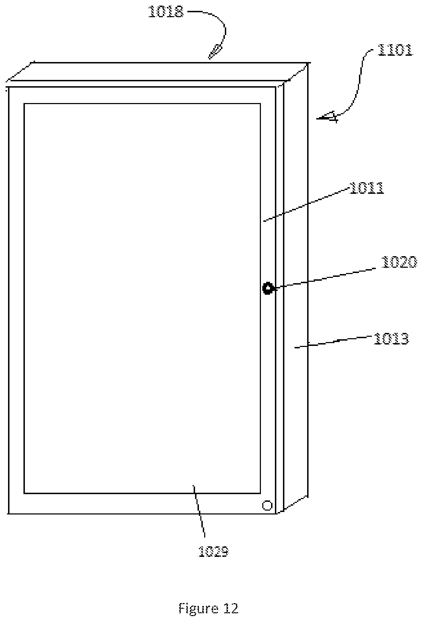

Figures 12 show the external perspective views of another ISP. Here, the ISP 1101 includes front cover 1011, frame 1013, and back wall 1018. The surface of the front cover 1011 contains either a LED display or touch screen 1029, hereinafter a touch screen is assumed. The screen is usually turned off and is automatically turned on when touched to reduce unnecessary energy consumption. The touch screen allows the user to display the status of the local electric system, change system settings, etc. To prevent unauthorized access a username and password are typically required. Here, PCCB 5021, 4021, and 3021 shown in Figure 5, 6, and 7 can be used. inside the box, so that it looks very similar to what was shown in Figure 9 and 10, even though the circuit board 1017 that comprises PCCBs 3021 (or 4021 or 5021), and the circuit for driving and interfacing with touch screen 1029 etc. (not labeled) is mounted on the back of the front panel 1011. The back view is identical to the back view shown in Figure 11 of the examples described in Figure 9-10.

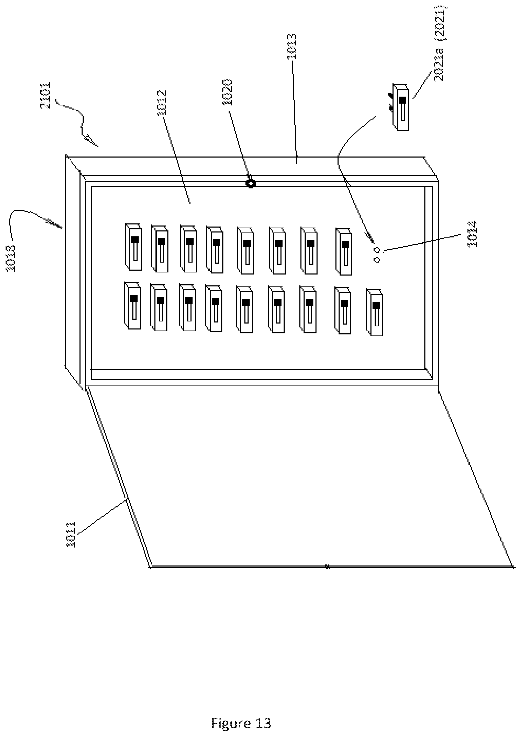

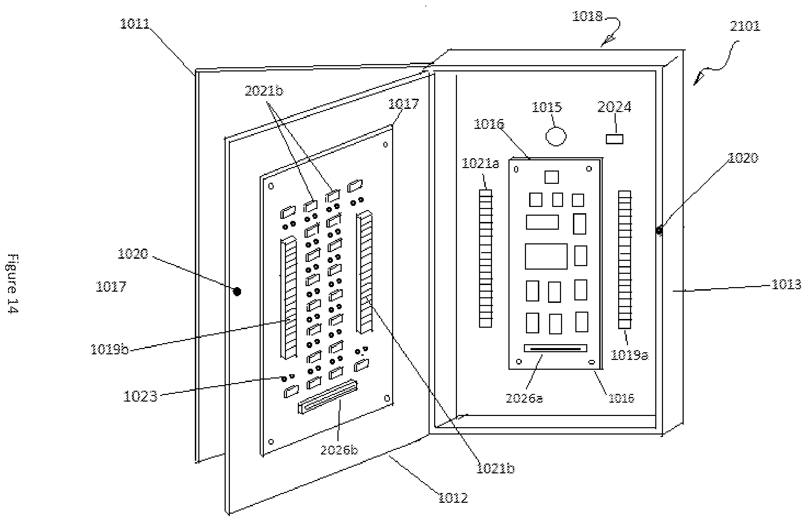

Figure 13 and 14 show an external and internal perspective view, respectively, of an example of the ISP 2101 using PCCB 2021 shown in Figure 8. On middle panel 1012, there are numerous holes 1014 defined. The traditional circuit breakers 2021a will sit on the front surface of middle panel 1012, the pins of circuit breakers 2021a will go through holes 1014 and connect to connectors 1023 on circuit board 1017 that is mounted on the back surface of the middle panel 1012. So when front cover 1011 is opened, the array of circuit breakers 2021a can be seen on the top surface of the middle panel 1012 as is shown in Figure 13. In this regard, ISP 2101 resembles a conventional circuit breaker panel when only the front cover 1011 is opened. Inside the box, traditional circuit breakers 2021a are connected to AC switches or relays 2021b mounted on the circuit board 1017 on the other side of middle panel 1012 through connector 1023 as is shown in Figure 14. The back view is also identical to the back view shown in Figure 11 of the examples described in Figure 9-10. All three of these examples use the same connectors (1015, 1019, 1021, and 1022), even though they present a different circuit design and layout with different components. And all three use as well the similar method to bring power into the ISP box and send branch power out of the box as described in paragraph 57.

Figure 15 is an illustration block diagrams of PCCBP 202a using PCCB 2021. The Main Power Line sensor 2023 can be programmed to operate only when the grid is down to save energy if the inverter of the grid tie renewable energy system has grid fault detection capability. In this situation, the grid condition can be monitored by the inverter when the grid is in a normal condition. When there is a power outage and the grid is disconnected from the local electric system, Main Power Line sensor 2023 will turn on and monitor the grid condition. Once the grid returns, Main Power Line sensor 2023 will disconnect from the grid automatically. Since PCCB 2021 has no sensor, the power consumption of each branch power line is monitored by sensor 2022 near circuit breaker 2021.

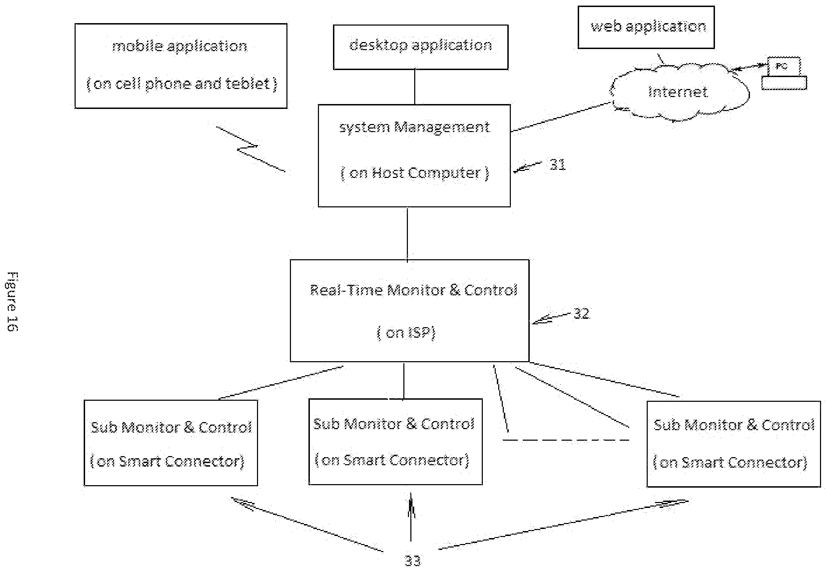

The ISP of of the disclosure provides a bottom up solution for Smart Grids, and also a natural and cost effective platform for smart homes since the power line communication is embedded in the local electric system. A block diagram of an exemplary Automatic Local Electric Management System operation software structure is shown in Figure 16. The exemplary software structure illustrated in Figure 16 includes System Management software 31, Real-Time Monitor & Control software 32, and Sub-Monitor & Control software 33. System Management software 31 generally performs some or all of the following tasks (and possibly other tasks as well): manages local electric system information sent from the ISP; responds and processes users' requests; enables authorized users to check the local electric system status; controls power connection to appliances; and creates or alters the local computer schedule from the local computer, mobile device, and website. Depending on which ISP structure is used, the System Management software 31 can be installed either on a host computer (not illustrated) or on the ISP. The Real-Time Monitor & Control software 32 is embedded in the ISP. The Real-Time Monitor & Control software 32 dynamically monitors and controls the local electric system and responds to requests from the host computer through the local network. Sub-Monitor& Control software 33 is embedded in the Smart Connector (or in each Smart Connector if more than one is used). The Sub-Monitor& Control software 33 monitors power consumption and controls the power connection of the appliance connected to it, and exchanges information with the ISP through power line communication. For monitoring and controlling of the system, a desktop application may reside on a local computer, a mobile application may reside on a mobile device (e.g., cell phone or tablet computer), and/or a web application may reside on a remote computer (which may communicate with the system over the internet).

When installing a new ISP system using the first or third example of ISP (Figures 9-10 or 13-14), the System Management software 31 is installed and executed on a host computer. The initialization and configuration of the system is performed with a local computer. During installation, to configure the ISP a computer with System Management software 31 installed needs to be directly connected to the ISP (e.g., through a USB cable). After initialization and configuration of the ISP system is complete, the direct connection to the local computer (e.g., the USB cable) can be removed, and then the ISP can communicate with the computer through the local network. When using the second example (Figures 12), the System Management software 31 can be installed and executed on the ISP, therefore the initialization and configurations of the ISP system can be performed on the touch screen of the ISP.

To configure the system, at least the following things have to be specified: the address of each appliance that is connected to the local electric system, communication protocols, whether a local electric generator or a grid tie renewable energy electric system is installed, and a Local Power Source table which includes power source information (shown in Figure 26). If the local electric generator does not have full backup capacity then the Priority table shown in Figure 27 must include a list of appliances that will be supplied with backup power when the grid is not available. If the backup power supply is a grid tie renewable energy electric system with limited backup capacity, then the operation mode of the appliances in the Priority table should be specified. If not specified, the default mode value (for example mode 2) applies.

The configuration tables are used as follows. The Match table (Figure 25) specifies the address of each appliance in the local electric system. Every PCCB has a predefined address (note the correlation in Figure 25 between Breaker Num (first column) and appliance address (last column)). The branch power line connected to each PCCB inherits the address of the corresponding PCCB. The address of a branch power line is typically indicated by the number beside the connectors 1022 on the outside surface of the back wall 1018 shown in Figure 11. An appliance that is directly connected to the branch power will have the same address as the branch power line. If several appliances are directly connected to the same branch power line, these appliances will all have the same address. If an appliance is a smart appliance, the address of the smart appliance is the combination of the smart appliance's own sub-address and the address of the branch power line that the smart appliance is connected to. If an appliance connects to a branch power line through a Smart Connector or Smart Plug, then the address of the appliance will be the combination of the Smart Connector's or Smart Plug' s address and the address of the branch power line that the appliance is connected to.

In Figure 25 for example, the dryer, washer, and dishwasher are directly connected to separate branch power lines 0x020000, x040000 and 0x090000, respectively. Therefore their addresses are 0x020000, x040000 and 0x090000, respectively. Since these appliances are the only devices connected to the branch power line they can be directly monitored and controlled by the ISP. In contrast, the ceiling light and outlets in bedroom 2 are connected to the same branch power line 0x070000 (see Figure 25). Therefore, the ceiling light and outlets in bedroom 2 have the same address and their power consumption and connections must be monitored and controlled together. In Figure 25, the living room and bed room 1 are supplied with power through branch power line 0x050000 and 0x06000. Since every appliance in the living room is connected to the branch power line through a Smart Connector or Smart Plug, each appliance in the living room has its own address. Therefore, these appliances can be monitored and controlled individually, and these appliances can each communicate directly to the ISP. This is also true of the appliances in bed room 1 and three other appliances in the Match Table.

Depending on how the local electric system is configured, the ISP may handle power outages differently. For example, if the local electric system has no backup power supply installed, the ISP will do nothing during a power outage. If the local electric system has full backup power capacity (i.e., enough capacity to power all appliances in the house), the ISP will disconnect the grid from the local electric system and connect the backup power supply. The local Power Source table in Figure 26 provides information about the backup power supply, such as the type and capacity of the power supply, so that the ISP can be configured properly. For example, Figure 26 shows there is both a renewable grid tie system capable of providing partial backup capacity (less than 1000 watts (W) and a classic backup system capable of providing full backup capacity (3000 W). If a backup power supply with limited capacity is installed, the Priority table shown in Figure 27 is used to specify the appliances that will receive the available backup power. The Priority table includes different modes that are primarily designed for local electric systems that include renewable energy components that have limited backup capability. The ISP allows the limited backup power supply to be used more effectively by balancing different needs among the appliances. For example, mode 1 turns the power on for 30 minutes, every 2 hours; mode 2 indicates that the power is constantly on; etc. So if the refrigerator is set to mode 1, it will run 30 minutes every two hours to keep food relatively fresh. Therefore, during the off phase this backup power can be used by other appliances (e.g., the computer, phone, light, etc.).

The ISP communicates with smart appliances or plugs either through the power line or by wireless communication protocol. The user may select wireless communication protocol at system setup.

During system initialization, the Match table content will be verified against real connections. Any mismatch can be corrected at this time. After system initialization has been successfully completed, all the system configuration information will be copied to the ISP and will be used for real time operation. The Match (Figure 25), Local Power Source (Figure 26) and Priority (Figure 27) data, maybe stored in the ISP in any suitable format, such as a dictionary, list, structure, or class.

After initialization, the Real-Time Monitor & Control software embedded within the ISP will start to operate independently. The major tasks of this software typically include, but may not be limited to, some or all of the following: (1) monitor the grid and take predefined action(s) when grid faults are detected; (2) monitor local power consumption and disconnect power to appliances that are not in operation to reduce standby power consumption; (3) perform scheduled tasks; (4) update system information and backup information to the local computer or remote server regularly; (5) respond to requests from appliances; and (6) respond to requests from the host computer.

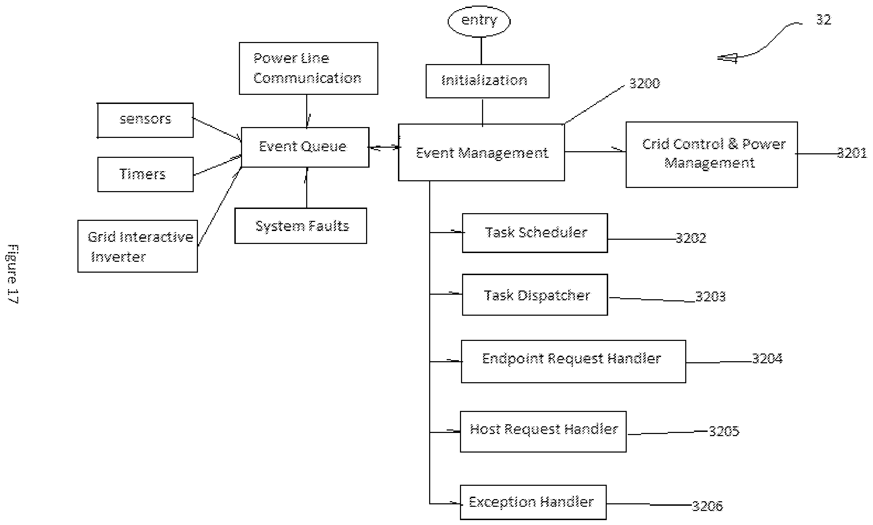

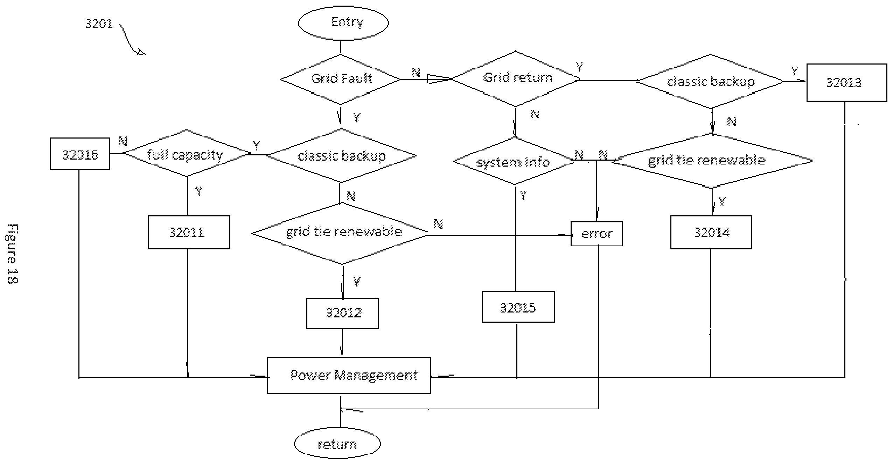

Figure 17 is the Real-Time Monitor & Control software operational block diagram. After initialization, control is hand over to Event Management module. Interrupts may be generated by the Power Line Communication module, sensors such as voltage, current, and frequency sensors, the grid interactive inverter, timers and system faults. These interrupts are handled by software routines that populate the Event Queue. The Event Management module checks the Event Queue and dispatches tasks waiting in the Event Queue to the corresponding modules to be executed. For example, interrupts generated by sensors will be assigned to the Grid Control & Power Management module 3201. The Tasks Scheduler 3202 and Task dispatcher 3203 handle events generated by timers. Interrupts created by the Power Line Communication module are sent to the Endpoints Request Handler module 3204. The Exception Handler module 3206 processes system faults events. The Host Request Handler 3205 is described below, in relation to Figure 18.

Figure 18 is a flow chart of the Grid Control & Power Management module 3201. Main switch 2024 is normally closed. When a fault is detected on the grid, corresponding sensors (such as Main Bus Sensor 2025) opens main switch 2024 and simultaneously generates an interrupt signal. The procedure or routine handling of this interrupt sends a Grid Fault event to the Event Queue (Figure 17). This event will be dispatched to Grid Control & Power Management module 3201 to handle (Figure 17). To process the Grid Fault event, the backup power supply information from the Local Power Supply table shown in Figure 26 will be checked. If the backup power supply is a full capacity classic electric generator, action 32011 is taken. The action 32011 includes disconnecting the local electric system from the utility grid, and connecting the backup power. If the backup power supply is a classic backup power supply with limited capacity, the action 32016 is taken. Action 32016 includes disconnecting the local electric system from the utility grid, getting a list of appliances from the priority table in Figure 27, and then sending the collected information to Power Management sub module to disconnect all the appliances except the appliances on the list. If, instead of a classic backup power supply, the backup power supply is a grid tie renewable energy electric system, then action 32012 is taken. This includes a. disconnecting the grid from the local electric system, b. checking the available power from the backup power supply, c. comparing the available power with the power required by the appliances listed in the Priority table (see Figure 27), d. storing selected appliances along with their properties to the Temporary Backup Power List, and f. sending gathered information to Power Management sub module.

When the grid returns after a power outage, Main Power Line Sensor 2023 in Figure 4 or Figure 15 generates an interrupt. The interrupt service routine generates a Grid Return event that is sent to the Event Queue. The Event Management module 3200 assigns this event to the Grid Control & Power Management module 3201 (Figure 17). It the event is confirmed to be Grid Return, then the type of backup power supply is checked first (see Figure 18). If the backup power supply is a classic electrical generator, the action 32013 will be taken. Action 32013 includes disconnecting classic electrical generator from local electric system and closing main switch 2024, thus connecting the local electric system to the utility grid. If the backup power supply is a grid tie renewable energy electric system, then action 32014 will be taken which includes disconnecting grid tie renewable energy electric system from local electric system first, then connecting local electric system to the utility grid, and then all appliances will be connected to local electric system, and finally reconnecting the grid tie renewable energy electric system to local electric system.

For the System Info event, such as voltage and current value sent from sensors, the Grid Control & Power Management module 3201 will take action 32015 which includes screening and storing received information, then sending logged information to the Power Management sub module for further processing.

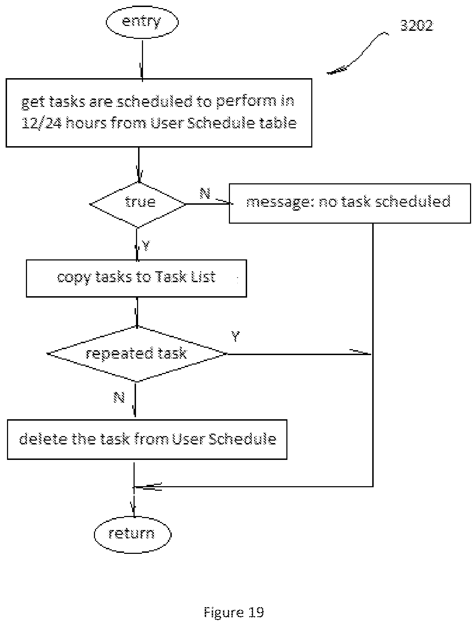

Smart appliances or appliances using Smart Connectors or Smart Plugs can be programmed by the user to automatically execute various tasks at scheduled times. Users can create or modify these scheduled tasks using a desktop computer, mobile device, or remote computer via connection to a website. The scheduled tasks will be saved in a User Schedule table, such as is shown in Figure 28. A task can be scheduled to execute at a specific date and time, to occur a single time or on a recurring basis (e.g., weekly). The Task Scheduler module 3202 shown in Figure 17 typically runs every 12 or 24 hours. The flow chart of the Task Scheduler 3202 is shown in Figure 19. The Task Scheduler first searches for tasks in the User Schedule table that should be performed in next 12 or 24 hours.

These tasks that should be performed in next 12 or 24 hours are copied to a Task list (not shown). If a selected task is a onetime task, the task entry will be deleted from the User Schedule table once it is copied to the Task list.

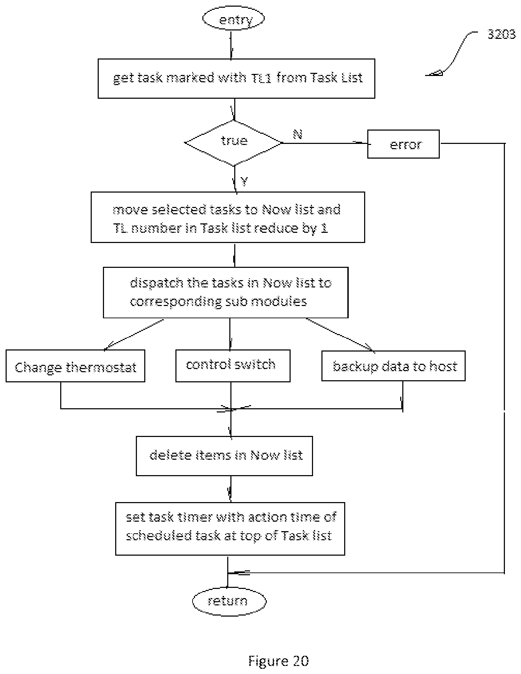

The tasks in the Task List are sorted by action time in descending order and labeled (e.g., TL1, TL2, etc.). The tasks with the same action time will have the same TL number. The task marked as TL1 will be used as reference to reset the task timer. When the task timer goes to zero the corresponding interrupt routine sends a Scheduled Task Execution Request event to the Event Queue. The Event Management module 3200 will call the Task Dispatcher module 3203 to handle this event. Figure 20 is a flow chart of the Task Dispatcher 3203. Here tasks marked with TL1 are moved from the Task List to the Now list, and all TL numbers are reduced by one in the Task List (e.g., TL2 goes to TL1). Tasks in the Now list are assigned to different sub modules depending on their action code. For example, if the task is to change temperature of a thermostat, the task will be assigned to the Change Thermostat sub module; if the task is to turn the light on, the task will be assigned to the Control Switch sub module, etc. If the task is to backup data, the task will be assigned to the Backup Data to Host sub module. When the task is completed the corresponding item in the Now list will be deleted and the action times of tasks marked with TL1 in the Task list will be used as a reference to reset the task timer.

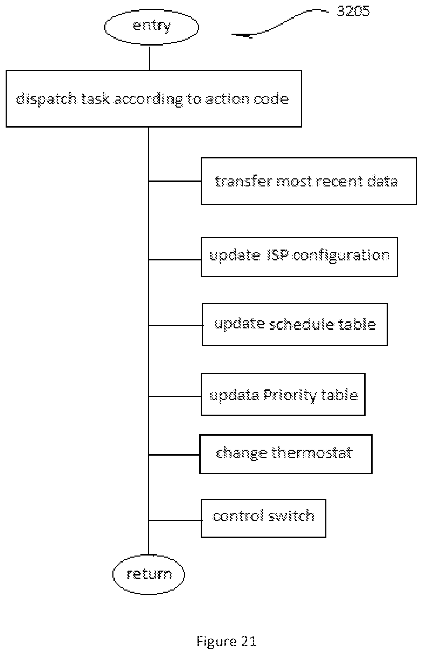

Figure 21 is a flow chart of the Host Request Handler module 3205 which receives an action code from the host computer and assigns tasks to the appropriate sub modules or functions according to the action code. Requests from the host computer may include updates to the ISP configuration, the Priority table, the User Scheduled tasks, etc. More direct requests may include changes to the thermostat of an appliance, changes in the power connections, etc. Requests to transfer most recent data may also be received and assigned.

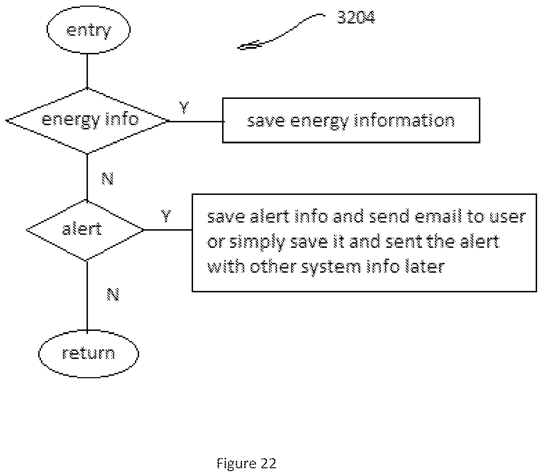

Figure 22 is a flow chart of the Endpoint Request Handler module 3204. Smart Connectors or Smart Plugs and Smart appliances, which are endpoints of the local electric system, communicate with the ISP through the Power Line Communication module. Requests from these endpoints may include, for example, information about recent energy consumption of an appliance or an alert to change the filter from a Smart refrigerator. This information will be stored in the ISP and copied to the host computer at a later time. Alert data may be saved and sent to a user via email.

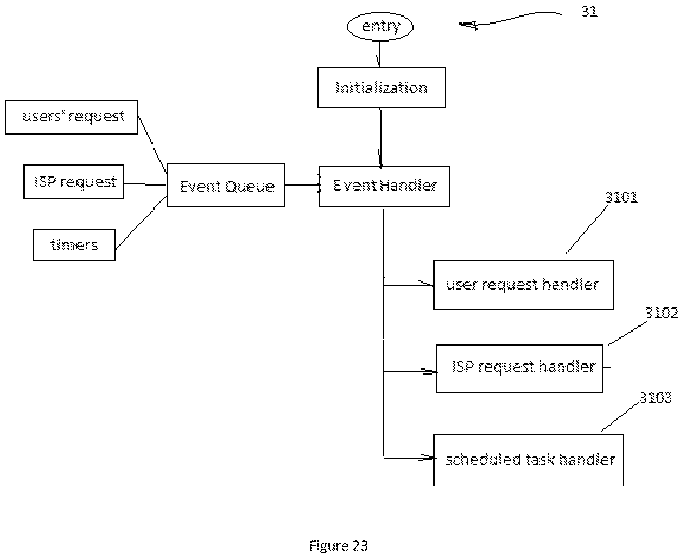

The System Management Software 31 operation block diagram is shown in Figure 23. After initialization, control is handed over to the Event Handler module. This module checks events in the Event Queue and assigns them to one or more of the handlers in Figure 23 (e.g., the ISP Request handler 3102, the user request handler 3101, the scheduled task handler 3103, etc.). The Event Queue is populated by requests send by the user, the ISP, the scheduler, or system faults (such as may be generated by timers). Different events may have different priorities which are used to rank events in the queue.

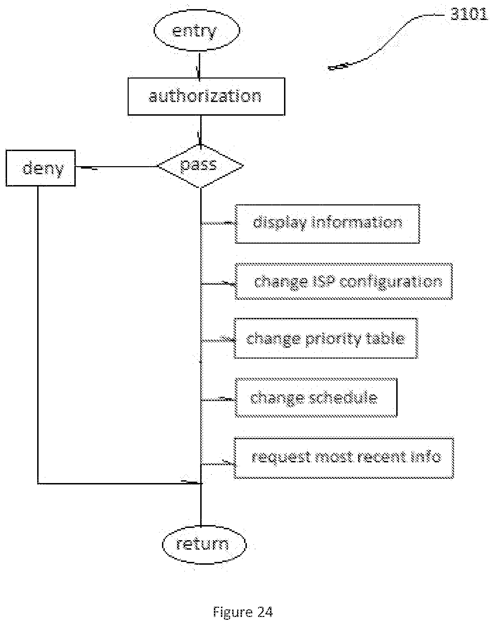

Figure 24 is a flow chart of the User Request Handler module 3101. When a user requests that the ISP display the local electric system status, the ISP will invoke an interrupt routine that handles user input. The interrupt routine grants a User Request event and sends the event to the Event Queue. Then the Event Handler requests that the User Request Handler module process the event. Before processing the request, the Authorization module will be called to verify the user's credentials. If this fails the request will be denied, but if it passes the user's request will be sent to the Display Information sub module. Other user requests include changing the system configuration, adding or altering a scheduled task, changing the priority table, transferring the most recent local electric data from the ISP to the host computer, etc.

For security and safety reasons, typically only authorized users are allowed to display local electric system information or to create or alter a schedule or a list of appliances to be provided with backup power supply in the priority table. But typically only the system installer can change the ISP system configuration. The Installer account can be disabled by the administrator after the ISP system is successfully running. The administrator has the authority to manage all user accounts and to disable the installer account, but the administrator cannot delete the installer account or change the ISP system configuration. Only the installer account can change the system configuration. This design reduces potential unwanted or unintended alterations of the ISP system configuration that may cause the local electric system to malfunction.

In general, the System Management software processes user's requests and manages ISP system data. When the second example of the ISP structure (shown in Figure 12) is used, the System Management software can be installed in the ISP directly instead of on the host computer. More than one processor might be used in the ISP. In this situation, the Host Request Handler in the Real-Time Monitor & Control software is more precisely handling the requests from the System Management. System backup can use cloud technology to backup data on remote servers.
As will be appreciated by one skilled in the art, the teachings of the present disclosure may be applied in the form of a system, method or computer program product. Accordingly, they may take the form of an entirely hardware construction, an entirely software program (including firmware, resident software, micro-code, etc.) or a mixture combining software and hardware aspects that may all generally be referred to herein as a "circuit," "module" or "system." Furthermore, such software may take the form of a computer program product stored in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code stored therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code stored on a computer readable medium may be transmitted using any appropriate medium, including but not limited to wireless, wireline, optical fiber cable, RF, etc., or any suitable combination of the foregoing.

Computer program code for carrying out operations regarding the teachings of the present disclosure may be written in any combination of one or more programming languages, including an object oriented programming language such as Java, Smalltalk, C++ or the like and conventional procedural programming languages, such as the "C" programming language or similar programming languages. If the service is also available to applications as a REST interface, then launching applications could use a scripting language like JavaScript to access the REST interface. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Characteristic of the present disclosure are described above with reference to flowchart illustrations and/or block diagrams of methods, apparatus (systems) and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to the teachings of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

"Computer" or "computing device" broadly refers to any kind of device which receives input data, processes that data through computer instructions in a program, and generates output data. Such computer can be a hand-held device, laptop or notebook computer, desktop computer, minicomputer, mainframe, server, cell phone, personal digital assistant, other device, or any combination thereof.

The foregoing is illustrative of the present invention and is not to be construed as limiting thereof. Although a few examples have been described, those skilled in the art will readily appreciate that many modifications are possible in those examples without materially departing from the teachings and advantages of this disclosure. Accordingly, all such modifications are intended to be included within the scope of this invention if covered by the appended claims. The invention is defined by the following claims, with equivalents of the claims to be included therein.

The terminology used herein is for the purpose of describing particular examples only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A local electric management system for efficiently using energy comprising:
a main power bus adapted to receive electric power from an electrical grid via a main incoming power line;
a central control unit (201);
a main switch (2024) electrically connected to the main power bus and adapted to be electrically connected to the main incoming power line, the main switch (2024) being connected to the central control unit (201) through a connector (2026) and a logic gate (2027), the main switch (2024) being configured to receive a control signal from the central control unit (201) and to selectively open and close to respectively disconnect and connect the main power bus from/to the main incoming power line in response to the control signal from the central control unit (201);
a plurality of program controlled circuit breakers, PCCBs, (5021; 2021; 3021; 4021) electrically connected to the main power bus, each PCCB(5021; 2021; 3021; 4021) being connected to the central control unit (201) through the connector (2026), each PCCB (5021; 2021; 3021; 4021) comprising at least an AC switch (5021a) configured to receive a control signal from the central control unit (201), and to selectively open and close in response to the control signal from the central control unit (201), each PCCB (5021; 2021; 3021; 4021) adapted to connect to a corresponding one of a plurality of electric branch lines to distribute electric power from the main power bus to one or more electric loads to be electrically connected to the electric branch lines, the opening and closing of the AC switch (5021a) of the corresponding PCCB (5021; 2021) respectively disconnecting and connecting the corresponding electric branch line from/to the main power bus, each PCCB (5021; 2021; 3021; 4021) also including branch current sensors (5021b) that are configured to monitor current on the respective electric branch line, wherein the branch current sensors (5021b) are configured to send branch current readings to the central control unit (201);
wherein the central control unit (201) is configured to send one or more control signals to the main switch (2024) and to the one or more PCCBs (5021; 2021; 3021; 4021) to selectively open and close the main switch (2024) and to selectively open and close the AC switch (5021a) of the one or more PCCBs (5021; 2021; 3021; 4021), respectively;
wherein the central control unit (201) is configured to monitor electric power consumption on one or more electric branch lines via the one or more branch current sensors (5021b),
wherein the central control unit (201) is configured to determine if electric power consumption on any one of the electric branch lines indicates that there are no electric loads on that electric branch line that are powered on; and
wherein, if the central control unit (201) determines that electric power consumption on any one of the electric branch lines indicates that there are no electric loads on that electric branch line that are powered on, the central control unit (201) is further configured to open the AC switch (5021a) of the PCCB (5021; 2021; 3021; 4021) corresponding to that electric branch line to disconnect that electric branch line from the main power bus.

2. The system of claim 1, further comprising a communication interface (203) adapted to enable information transmission between the central control unit (201) and a local computer, one or more appliances electrically connected to one or more of the plurality of electric branch lines through a local wireless network.

3. The system of claim 2, wherein the communications interface (203) is further adapted to enable information transmission between the central control unit (201) and at least one of a remote computer (107), a remote server, or mobile device (108).

4. The system of claim 3, wherein the communications interface (103) is further adapted to enable information transmission between the central control unit (201) and one or more appliances electrically connected to one or more of the plurality of electric branch lines through power line communication, PLC.

5. The system of claim 1, further comprising at least a main sensor electrically connected to the main power bus, wherein the main sensor (2025) is configured to communicate with the central control unit (201) via an electronic signal connection to the central control unit (201).

6. The system of claim 5, wherein the main sensor is further configured to detect an over-voltage condition or an under-voltage condition on the main power bus, and wherein the sensor is further configured to monitor electric power consumption on the main power bus, preferably
wherein, the main sensor is a first sensor, wherein the system further comprises:
a second sensor adapted to be electrically connected to the main power line and in communication with the central control unit (201);
wherein the central control unit (201) is adapted to receive an indication from the first sensor whether electric power is present or not present on the main power line;
wherein, if the central control unit (201) receives an indication from the first sensor that electric power is present on the main power line, the central control unit (201) is configured for disabling the second sensor or disconnecting the second sensor from the main power bus;
wherein, if the central control unit (201) receives an indication from the first sensor that electric power is not present on the main power line, the central control unit (201) is configured for enabling the second sensor or connecting the second sensor to the main power line; and
wherein, when the second sensor is enabled or connected to the main power line, the second sensor is configured to detect a return of electric power to the main power line and to notify the central control unit (201) that electric power has returned to the main power line.

7. The system of claim 6, wherein, if electric power is not present on the main power line, the central control unit (201) is configured to open the main switch (2024) to electrically disconnect the main power line from the main power bus.

8. The system of claim 9, wherein, if a full capacity backup electrical power system is in place, the central control unit (201) is further configured to connect the full capacity backup electrical power system to the main power bus, preferably
wherein, if electric power returns to the main power line, the central control unit (201) is further configured to disconnect the full capacity backup electrical power system from the main power bus, close the main switch (2024) to electrically connect the main power line to the main power bus, and disable the second sensor.

9. The system of claim 7, wherein, if a partial capacity backup electrical power system is in place, the central control unit (201) is further configured to (a) determine which one or more electrical loads can be powered by the partial capacity backup electrical power system, (b) open one or more AC switches (5021a) to disconnect the one or more electrical branch lines corresponding to one or more electrical loads that cannot be powered by the partial capacity backup electrical power system, and (c) connect the partial capacity backup electrical power system to the main power bus, preferably
wherein the central control unit (201) is further configured to open one or more AC switches (5021a) to disconnect the one or more electrical branch lines corresponding to one or more electrical loads that cannot be powered by partial capacity backup electrical power system further based on one or more user-defined priorities, or
wherein, if electric power returns to the main power line, the central control unit (201) is further configured to disconnect the partial capacity backup electrical power system from the main power bus, close the main switch (2024) to electrically connect the main power line to the main power bus, close any open AC switches (5021a), and disable the second sensor.

10. The system of claim 7, wherein, if a grid tie renewable energy system (102) is in place, the central control unit (201) is further configured to (a) determine how much electrical power is being produced by the grid tie renewable energy system (102), (b) determine which one or more electrical loads can be powered by the grid tie renewable energy system (102) based on the determination of how much electrical power is being produced by the grid tie renewable energy system (102), (c) open one or more AC switches (5021a) to disconnect the one or more electrical branch lines corresponding to one or more electrical loads that cannot be powered by the grid tie renewable energy system (102) based on the determination of how much electrical power is being produced by the grid tie renewable energy system (102), and (d) connect the grid tie renewable energy system (102) to the main power bus, preferably
wherein the central control unit (201) is further configured to open one or more AC switches (5021a) to disconnect the one or more electrical branch lines corresponding to one or more electrical loads that cannot be powered by the grid tie renewable energy system (102) further based on one or more user-defined priorities, or
wherein, if electric power returns to the main power line, the central control unit (201) is further configured to disconnect the grid tie renewable energy system (102) from the main power bus, close the main switch (2024) to electrically connect the main power line to the main power bus, close any open PCCBs (5021; 2021; 3021; 4021), connect the grid tie renewable energy system (102) to the main power bus, and disable the second sensor.

11. The system of claim 7, wherein, if a partial capacity backup electrical power system is in place, the central control unit (201) is further configured to disconnect and connect one or more predetermined electrical loads at predetermined time intervals to enable an increased number of electrical loads to receive electrical power at least.

12. The system of claim 1, wherein at least one PCCB (5021; 2021; 3021; 4021) further comprises a control circuit (5021e) in communication with the current sensor (5021b) and the AC switch (5021a), the branch current sensor (5021b) and control circuit (5021e) configured to detect over-current on the electric branch line (103), the control circuit (5021e) configured to open the AC switch (5021a) when over-current is detected on the electric branch line (103).

## Patentansprüche

1. Lokales elektrisches Verwaltungssystem für die effiziente Nutzung von Energie, umfassend:
einen Hauptstrombus, der dazu eingerichtet ist, elektrischen Strom aus einem elektrischen Netz über eine eingehende Hauptstromleitung zu empfangen;
eine zentrale Steuereinheit (201);
einen Hauptschalter (2024), der mit dem Hauptstrombus elektrisch verbunden ist und dazu eingerichtet ist, mit der eingehenden Hauptstromleitung elektrisch verbunden zu werden, wobei der Hauptschalter (2024) über einen Verbinder (2026) und ein Logikgatter (2027) mit der zentralen Steuereinheit (201) verbunden ist, wobei der Hauptschalter (2024) dazu eingerichtet ist, ein Steuersignal von der zentralen Steuereinheit (201) zu empfangen und selektiv zu öffnen und zu schließen, um den Hauptstrombus von der eingehenden Hauptstromleitung zu trennen bzw. mit der eingehenden Hauptstromleitung als Reaktion auf das Steuersignal von der zentralen Steuereinheit (201) zu verbinden;
eine Vielzahl von programmgesteuerten Schaltungsunterbrechern, PCCBs, (5021; 2021; 3021; 4021), die elektrisch mit dem Hauptstrombus verbunden sind, wobei jeder PCCB (5021; 2021; 3021; 4021) über den Verbinder (2026) mit der zentralen Steuereinheit (201) verbunden ist, jeder PCCB (5021; 2021); 3021; 4021) wenigstens einen Wechselstromschalter (5021a) umfasst, der dazu eingerichtet ist, ein Steuersignal von der zentralen Steuereinheit (201) zu empfangen und als Reaktion auf das Steuersignal von der zentralen Steuereinheit (201) selektiv zu öffnen und zu schließen, jeder PCCB (5021; 2021; 3021; 4021) an eine entsprechende einer Vielzahl von elektrischen Abzweigleitungen angeschlossen werden kann, um elektrischen Strom von dem Hauptstrombus an eine oder zahlreiche elektrische Verbraucher zu verteilen, die elektrisch an die elektrischen Abzweigleitungen angeschlossen werden sollen, wobei das Öffnen und Schließen des Wechselstromschalters (5021a) des entsprechenden PCCB (5021; 2021) jeweils die entsprechende elektrische Abzweigleitung von dem/zu dem Hauptstrombus trennen und verbinden, jeder PCCB (5021; 2021; 3021; 4021) zudem Abzweigstromsensoren (5021b) enthält, die dazu eingerichtet sind, den Strom auf der jeweiligen elektrischen Abzweigleitung zu überwachen, und die Abzweigstromsensoren (5021b) dazu eingerichtet sind, die Abzweigstrommesswerte an die zentrale Steuereinheit (201) zu senden;
wobei die zentrale Steuereinheit (201) dazu eingerichtet ist, ein oder zahlreiche Steuersignale an den Hauptschalter (2024) und an die eine oder die zahlreichen PCCBs (5021; 2021; 3021; 4021) zu senden, um den Hauptschalter (2024) selektiv zu öffnen und zu schließen und um den Wechselstromschalter (5021a) der einen oder der zahlreichen PCCBs (5021; 2021; 3021; 4021) selektiv zu öffnen und zu schließen;
die zentrale Steuereinheit (201) dazu eingerichtet ist, den elektrischen Stromverbrauch auf einer oder zahlreichen elektrischen Abzweigleitungen über den einen oder die zahlreichen Abzweigstromsensoren (5021b) zu überwachen,
die zentrale Steuereinheit (201) dazu eingerichtet ist, festzustellen, ob der elektrische Stromverbrauch auf einer der elektrischen Abzweigleitungen anzeigt, dass keine elektrischen Verbraucher auf dieser elektrischen Abzweigleitung eingeschaltet sind; und,
wenn die zentrale Steuereinheit (201) feststellt, dass der elektrische Stromverbrauch auf einer der elektrischen Abzweigleitungen anzeigt, dass keine elektrischen Verbraucher auf dieser elektrischen Abzweigleitung eingeschaltet sind, die zentrale Steuereinheit (201) weiterhin dazu eingerichtet ist, den dieser elektrischen Abzweigleitung entsprechenden Wechselstromschalter (5021a) der PCCB (5021; 2021; 3021; 4021) zu öffnen, um diese elektrische Abzweigleitung von dem Hauptstrombus zu trennen.

2. System nach Anspruch 1, weiterhin umfassend eine Kommunikationsschnittstelle (203), die dazu eingerichtet ist, eine Informationssendung zwischen der zentralen Steuereinheit (201) und einem lokalen Computer zu ermöglichen, wobei ein oder zahlreiche Geräte über ein lokales drahtloses Netzwerk elektrisch mit einer oder mehreren der zahlreichen elektrischen Abzweigleitungen verbunden sind.

3. System nach Anspruch 2, bei dem die Kommunikationsschnittstelle (203) weiterhin dazu eingerichtet ist, eine Informationssendung zwischen der zentralen Steuereinheit (201) und wenigstens einem von einem entfernten Computer (107), einem entfernten Server oder einem mobilen Gerät (108) zu ermöglichen.

4. System nach Anspruch 3, bei dem die Kommunikationsschnittstelle (103) weiterhin dazu eingerichtet ist, die Informationssendung zwischen der zentralen Steuereinheit (201) und einem oder zahlreichen Geräten zu ermöglichen, die elektrisch mit einer oder mehreren der zahlreichen elektrischen Abzweigleitungen durch Stromleitungskommunikation, PLC, verbunden sind.

5. System nach Anspruch 1, weiterhin umfassend wenigstens einen Hauptsensor, der elektrisch mit dem Hauptstrombus verbunden ist, wobei der Hauptsensor (2025) dazu eingerichtet ist, mit der zentralen Steuereinheit (201) über eine elektronische Signalverbindung zu der zentralen Steuereinheit (201) zu kommunizieren.

6. System nach Anspruch 5, bei dem der Hauptsensor weiterhin dazu eingerichtet ist, einen Überspannungszustand oder einen Unterspannungszustand auf dem Hauptstrombus zu erfassen und der Sensor weiterhin dazu eingerichtet ist, den elektrischen Stromverbrauch auf dem Hauptstrombus zu überwachen, wobei vorzugsweise
der Hauptsensor ein erster Sensor ist und das System weiterhin umfasst:
einen zweiten Sensor, der elektrisch an die Hauptstromleitung angeschlossen werden kann und mit der zentralen Steuereinheit (201) in Verbindung steht;
wobei die zentrale Steuereinheit (201) dazu eingerichtet ist, einen Hinweis von dem ersten Sensor zu empfangen, ob elektrischer Strom auf der Hauptstromleitung vorhanden ist oder nicht;
wenn die zentrale Steuereinheit (201) einen Hinweis von dem ersten Sensor empfängt, dass elektrischer Strom auf der Hauptstromleitung vorhanden ist, die zentrale Steuereinheit (201) dazu eingerichtet ist, den zweiten Sensor zu deaktivieren oder den zweiten Sensor von dem Hauptstrombus zu trennen;
wenn die zentrale Steuereinheit (201) einen Hinweis von dem ersten Sensor empfängt, dass kein elektrischer Strom auf der Hauptstromleitung vorhanden ist, die zentrale Steuereinheit (201) dazu eingerichtet ist, den zweiten Sensor zu aktivieren oder den zweiten Sensor mit der Hauptstromleitung zu verbinden; und,
wenn der zweite Sensor aktiviert oder an die Hauptstromleitung angeschlossen ist, der zweite Sensor dazu eingerichtet ist, eine Rückkehr von elektrischem Strom zu der Hauptstromleitung zu erkennen und der zentralen Steuereinheit (201) mitzuteilen, dass elektrischer Strom zu der Hauptstromleitung zurückgekehrt ist.

7. System nach Anspruch 6, bei dem, wenn kein elektrischer Strom auf der Hauptstromleitung vorhanden ist, die zentrale Steuereinheit (201) dazu eingerichtet ist, den Hauptschalter (2024) zu öffnen, um die Hauptstromleitung elektrisch von dem Hauptstrombus zu trennen.

8. System nach Anspruch 9, bei dem, wenn ein elektrisches Vollkapazitäts-Notstromversorgungssystem vorhanden ist, die zentrale Steuereinheit (201) weiterhin dazu eingerichtet ist, das elektrische Vollkapazitäts-Notstromversorgungssystem an den Hauptstrombus anzuschließen, wobei vorzugsweise,
wenn der elektrische Strom in die Hauptstromleitung zurückkehrt, die zentrale Steuereinheit (201) weiterhin dazu eingerichtet ist, das elektrische Vollkapazitäts-Notstromversorgungssystem von dem Hauptstrombus zu trennen, den Hauptschalter (2024) zu schließen, um die Hauptstromleitung elektrisch mit dem Hauptstrombus zu verbinden, und den zweiten Sensor zu deaktivieren.

9. System nach Anspruch 7, bei dem, wenn ein elektrisches Teilkapazitäts-Notstromversorgungssystem vorhanden ist, die zentrale Steuereinheit (201) weiterhin dazu eingerichtet ist, (a) zu bestimmen, welcher eine oder zahlreiche elektrische Verbraucher durch das elektrische Teilkapazitäts-Notstromversorgungssystem versorgt werden können, (b) einen oder zahlreiche Wechselstromschalter (5021a) zu öffnen, um die eine oder zahlreichen elektrischen Abzweigleitungen, die einem oder zahlreichen elektrischen Verbrauchern entsprechen, die nicht durch das elektrische Teilkapazitäts-Notstromversorgungssystem versorgt werden können, abzuschalten, und (c) das elektrische Teilkapazitäts-Notstromversorgungssystem mit dem Hauptstrombus zu verbinden, wobei vorzugsweise
die zentrale Steuereinheit (201) weiterhin dazu eingerichtet ist, einen oder mehrere Wechselstromschalter (5021a) zu öffnen, um die eine oder mehreren elektrischen Abzweigleitungen, die einer oder mehreren elektrischen Verbrauchern entsprechen, die nicht durch ein elektrisches Teilkapazitäts-Notstromversorgungssystem versorgt werden können, auf der Grundlage einer oder zahlreicher benutzerdefinierter Prioritäten abzuschalten, oder,
wenn der elektrische Strom in die Hauptstromleitung zurückkehrt, die zentrale Steuereinheit (201) weiterhin dazu eingerichtet ist, das elektrische Teilkapazitäts-Notstromversorgungssystem von dem Hauptstrombus zu trennen, den Hauptschalter (2024) zu schließen, um die Hauptstromleitung elektrisch mit dem Hauptstrombus zu verbinden, sämtliche geöffneten Wechselstromschalter (5021a) zu schließen und den zweiten Sensor zu deaktivieren.

10. System nach Anspruch 7, bei dem, wenn ein System (102) für netzgebundene erneuerbare Energie vorhanden ist, die zentrale Steuereinheit (201) weiterhin dazu eingerichtet ist, (a) zu bestimmen, wie viel elektrischer Strom durch das System (102) für netzgebundene erneuerbare Energie erzeugt wird, (b) welcher eine oder zahlreiche elektrische Verbraucher durch das System (102) für netzgebundene erneuerbare Energie versorgt werden können, basierend auf der Bestimmung zu bestimmen, wie viel elektrischer Strom durch das System (102) für netzgebundene erneuerbare Energie erzeugt wird, (c) einen oder mehrere Wechselstromschalter (5021a) zu öffnen, um die eine oder mehreren elektrischen Abzweigleitungen, die einer oder zahlreichen elektrischen Verbrauchern entsprechen, die nicht durch das netzgebundene System (102) für erneuerbare Energie versorgt werden können, basierend auf der Bestimmung zu trennen, wie viel elektrische Energie durch das netzgebundene System (102) für erneuerbare Energie erzeugt wird, und (d) das netzgebundene System (102) für erneuerbare Energie mit dem Hauptstrombus zu verbinden, wobei vorzugsweise
die zentrale Steuereinheit (201) weiterhin dazu eingerichtet ist, einen oder zahlreiche Wechselstromschalter (5021a) zu öffnen, um die eine oder mehreren elektrischen Abzweigleitungen, die einem oder mehreren elektrischen Verbrauchern entsprechen, die nicht durch das netzgebundene System (102) für erneuerbare Energie versorgt werden können, weiterhinauf der Grundlage einer oder zahlreicher benutzerdefinierter Prioritäten zu trennen, oder,
wenn elektrischer Strom in die Hauptstromleitung zurückkehrt, die zentrale Steuereinheit (201) weiterhin dazu eingerichtet ist, das netzgebundene System (102) für erneuerbare Energie von dem Hauptstrombus zu trennen, den Hauptschalter (2024) zu schließen, um die Hauptstromleitung elektrisch mit dem Hauptstrombus zu verbinden, sämtliche offenen PCCBs (5021; 2021; 3021; 4021) zu schließen, das netzgebundene System (102) für erneuerbare Energie mit dem Hauptstrombus zu verbinden und den zweiten Sensor zu deaktivieren.

11. System nach Anspruch 7, bei dem, wenn ein elektrisches Teilkapazitäts-Notstromversorgungssystem vorhanden ist, die zentrale Steuereinheit (201) weiterhin dazu eingerichtet ist, einen oder zahlreiche vorbestimmte elektrische Verbraucher in vorbestimmten Zeitintervallen zu trennen und anzuschließen, um einer erhöhten Anzahl von elektrischen Verbrauchern zu ermöglichen, wenigstens elektrischen Strom zu empfangen.

12. System nach Anspruch 1, bei dem wenigstens ein PCCB (5021; 2021; 3021; 4021) weiterhin eine Steuerschaltung (5021e) in Verbindung mit dem Stromsensor (5021b) und dem Wechselstromschalter (5021a) umfasst, wobei der Abzweigstromsensor (5021b) und die Steuerschaltung (5021e) dazu eingerichtet sind, einen Überstrom auf der elektrischen Abzweigleitung (103) zu erfassen, und die Steuerschaltung (5021e) dazu eingerichtet ist, den Wechselstromschalter (5021a) zu öffnen, wenn ein Überstrom auf der elektrischen Abzweigleitung (103) erfasst wird.

## Revendications

1. Système de gestion électrique local pour utiliser efficacement de l'énergie comprenant :
un bus d'alimentation principale adapté pour recevoir une puissance électrique d'un réseau électrique via une ligne d'alimentation entrante principale ;
une unité de contrôle centrale (201) ;
un commutateur principal (2024) connecté électriquement au bus d'alimentation principal et adapté pour être connecté électriquement à la ligne d'alimentation entrante principale, le commutateur principal (2024) étant connecté à l'unité de contrôle centrale (201) via un connecteur (2026) et une porte logique (2027), le connecteur principal (2024) étant configuré pour recevoir un signal de contrôle provenant de l'unité de contrôle centrale (201) et pour s'ouvrir et se fermer sélectivement pour déconnecter et connecter respectivement le bus d'alimentation principale de/à la ligne d'alimentation entrante principale en réponse au signal de contrôle provenant de l'unité de contrôle centrale (201) ;
une pluralité de disjoncteurs contrôlé par un programme, PCCB (Program Controlled Circuit Breakers), (5021 ; 2021 ; 3021 ; 4021) électriquement connecté au bus d'alimentation principal, chaque PCCB (5021 ; 2021 ; 3021 ; 4021) étant connecté à l'unité de contrôle centrale (201) via le connecteur (2026), chaque PCCB (5021 ; 2021 ; 3021 ; 4021) comprenant au moins un commutateur CA (5021a) configuré pour recevoir un signal de contrôle provenant de l'unité de contrôle centrale (201), et pour s'ouvrir et se fermer sélectivement en réponse au signal de contrôle provenant de l'unité de contrôle centrale (201), chaque PCCB (5021 ; 2021 ; 3021 ; 4021) étant adapté pour se connecter à une correspondante d'une pluralité de lignes secondaires électriques pour distribuer une puissance électrique provenant du bus d'alimentation principal à une ou plusieurs charges électriques à connecter électriquement aux lignes secondaires électriques, l'ouverture et la fermeture du commutateur CA (5021a) du PCCB correspondant (5021 ; 2021) déconnectant et connectant respectivement la ligne secondaire électrique du/au bus d'alimentation principal, chaque PCCB (5021 ; 2021 ; 3021 ; 4021) incluant également des capteurs de courant de ligne secondaire (5021b) qui sont configurés pour surveiller le courant sur la ligne secondaire électrique respective, dans lequel les capteurs de courant de ligne secondaire (5021b) sont configurés pour envoyer des relevés de courant de ligne secondaire à l'unité de contrôle centrale (201) ;
dans lequel l'unité de contrôle centrale (201) est configurée pour envoyer un ou plusieurs signaux de contrôle au commutateur principal (2024) et à l'un ou plusieurs PCCB (5021 ; 2021 ; 3021 ; 4021) pour ouvrir et fermer sélectivement le commutateur principal (2024) et pour ouvrir et fermer sélectivement le commutateur CA (5021a) de l'un ou plusieurs PCCB (5021 ; 2021 ; 3021 ; 4021), respectivement ;
dans lequel l'unité de contrôle centrale (201) est configurée pour surveiller la consommation de puissance électrique sur une ou plusieurs lignes secondaires électriques via l'un ou plusieurs capteurs de courant de ligne secondaire (5021b),
dans lequel l'unité de contrôle centrale (201) est configurée pour déterminer si une consommation de puissance électrique sur une quelconque des lignes secondaires électriques indique une absence de charges électriques sous tension sur cette ligne secondaire électrique ; et
dans lequel, si l'unité de contrôle centrale (201) détermine qu'une consommation de puissance électrique sur l'une quelconque des lignes secondaires électriques indique une absence de charges électriques sous tension sur cette ligne secondaire électrique, l'unité de contrôle centrale (201) est configurée en outre pour ouvrir le commutateur CA (5021a) du PCCB (5021 ; 2021 ; 3021 ; 4021) correspondant à cette ligne secondaire électrique pour déconnecter cette ligne secondaire électrique du bus d'alimentation principal.

2. Le système de la revendication 1, comprenant en outre une interface de communication (203) adaptée pour permettre une transmission d'informations entre l'unité de contrôle centrale (201) et un ordinateur local, un ou plusieurs appareils électriquement connectés à une ou plusieurs de la pluralité de lignes secondaires électrique via un réseau sans fil local.

3. Le système de la revendication 2, dans lequel l'interface de communication (203) est adaptée en outre pour permettre une transmission d'informations entre l'unité de contrôle centrale (201) et au moins un d'un ordinateur distant (107), un serveur distant, ou un dispositif mobile (108).

4. Le système de la revendication 3, dans lequel l'interface de communication (103) est adaptée en outre pour permettre une transmission d'informations entre l'unité de contrôle centrale (201) et un ou plusieurs appareils électriquement connectés à une ou plusieurs de la pluralité de lignes secondaires électrique via une communication par ligne électrique, PLC (Power Line Communication).

5. Le système de la revendication 1, comprenant en outre au moins un capteur principal électriquement connecté au bus d'alimentation principale, dans lequel le capteur principal (2025) est configuré pour communiquer avec l'unité de contrôle centrale (201) via une connexion par signal électronique vers l'unité de contrôle centrale (201) .

6. Le système de la revendication 5, dans lequel le capteur principal est configuré en outre pour détecter un état de surtension ou un état de sous-tension sur le bus d'alimentation principale, et dans lequel le capteur est configuré en outre pour surveiller la consommation de puissance électrique sur le bus d'alimentation principale, de préférence
dans lequel le capteur principal est un premier capteur, dans lequel le système comprend en outre :
un deuxième capteur adapté pour être connecté électriquement à la ligne d'alimentation principale et en communication avec l'unité de contrôle centrale (201) ;
dans lequel l'unité de contrôle centrale (201) est adaptée pour recevoir une indication provenant du premier capteur spécifiant si une puissance électrique est présente ou non présente sur la ligne d'alimentation principale ;
dans lequel, si l'unité de contrôle centrale (201) reçoit une indication provenant du premier capteur spécifiant qu'une puissance électrique est présente sur la ligne d'alimentation principale, l'unité de contrôle centrale (201) est configurée pour désactiver le deuxième capteur ou déconnecter le deuxième capteur du bus d'alimentation principale ;
dans lequel, si l'unité de contrôle centrale (201) reçoit une indication provenant du premier capteur spécifiant qu'une puissance électrique n'est pas présente sur la ligne d'alimentation principale, l'unité de contrôle centrale (201) est configurée pour activer le deuxième capteur ou connecter le deuxième capteur au bus d'alimentation principale ; et
dans lequel, lorsque le deuxième capteur est activé ou connecté à la ligne d'alimentation principale, le deuxième capteur est configuré pour détecter un retour de puissance électrique vers la ligne d'alimentation principale et pour notifier l'unité de contrôle centrale (201) qu'une puissance électrique est retournée à la ligne d'alimentation principale.

7. Le système de la revendication 6, dans lequel, si une puissance électrique n'est pas présente sur la ligne d'alimentation principale, l'unité de contrôle centrale (201) est configurée pour ouvrir le commutateur principal (2024) pour déconnecter électriquement la ligne d'alimentation principale du bus d'alimentation principale.

8. Le système de la revendication 9, dans lequel, si un système d'alimentation électrique de secours de pleine capacité est en place, l'unité de contrôle centrale (201) est configurée en outre pour connecter le système d'alimentation électrique de secours de pleine capacité au bus l'alimentation principale, de préférence
dans lequel, si une puissance électrique retourne à la ligne d'alimentation principale, l'unité de contrôle centrale (201) est configurée en outre pour déconnecter le système d'alimentation électrique de secours de pleine capacité du bus d'alimentation principale, fermer le commutateur principal (2024) pour connecter électriquement la ligne d'alimentation principale au bus d'alimentation principale, et désactiver le deuxième capteur.

9. Le système de la revendication 7, dans lequel, si un système d'alimentation électrique de secours de capacité partielle est en place, l'unité de contrôle centrale (201) est configurée en outre pour (a) déterminer quelles une ou plusieurs charges électriques peuvent être alimentées par le système d'alimentation électrique de secours de capacité partielle, (b) ouvrir un ou plusieurs commutateurs CA (5021a) pour déconnecter l'une ou plusieurs lignes secondaires électriques correspondant à une ou plusieurs charges électriques qui ne peuvent pas être alimentées par le système d'alimentation électrique de secours de capacité partielle, et (c) connecter le système d'alimentation électrique de secours de capacité partielle au bus d'alimentation principale, de préférence
dans lequel l'unité de contrôle centrale (201) est configurée en outre pour ouvrir un ou plusieurs commutateurs CA (5021a) pour déconnecter l'une ou plusieurs lignes secondaires électriques correspondant à une ou plusieurs charges électriques qui ne peuvent pas être alimentées par un système d'alimentation électrique de secours de capacité partielle reposant en outre une ou plusieurs priorités définies par l'utilisateur, ou
dans lequel, si une puissance électrique retourne à la ligne d'alimentation principale, l'unité de contrôle centrale (201) est configurée en outre pour déconnecter le système d'alimentation électrique de secours de capacité partielle du bus d'alimentation principale, fermer le commutateur principal (2024) pour connecter électriquement la ligne d'alimentation principale au bus d'alimentation principale, fermer tout commutateur CA ouvert (5021a), et désactiver le deuxième capteur.

10. Le système de la revendication 7, dans lequel, si un système d'énergie renouvelable raccordé au réseau (102) est en place, l'unité de contrôle centrale (201) est configurée en outre pour (a) déterminer quelle quantité de puissance électrique est produite par le système d'énergie renouvelable raccordé au réseau (102), (b) déterminer quelles une ou plusieurs charges électriques peuvent être alimentées par le système d'énergie renouvelable raccordé au réseau (102) selon la détermination d'une quantité de puissance électrique produits par le système d'énergie renouvelable raccordé au réseau (102), (c)ouvrir un ou plusieurs commutateurs CA (5021a) pour déconnecter l'une ou plusieurs lignes secondaires électriques correspondant à une ou plusieurs charges électriques qui ne peuvent pas être alimentées par le système d'énergie renouvelable raccordé au réseau (102) selon la détermination d'une quantité de puissance électrique produite par le système d'énergie renouvelable raccordé au réseau (102), et (d) connecter le système d'énergie renouvelable raccordé au réseau (102) au bus d'alimentation principale, de préférence
dans lequel l'unité de contrôle centrale (201) est configurée en outre pour ouvrir un ou plusieurs commutateurs CA (5021a) pour déconnecter l'une ou plusieurs lignes secondaires électriques correspondant à une ou plusieurs charges électriques qui ne peuvent pas être alimentées par le système d'énergie renouvelable raccordé au réseau (102) selon en outre une ou plusieurs priorités définies par l'utilisateur, ou
dans lequel, si une puissance électrique retourne à la ligne d'alimentation principale, l'unité de contrôle centrale (201) est configurée en outre pour déconnecter le système d'énergie renouvelable raccordé au réseau (102) du bus d'alimentation principale, fermer le commutateur principal (2024) pour connecter électriquement a ligne d'alimentation principale au bus d'alimentation principale, fermer tout PCCB ouvert (5021 ; 2021 ; 3021 ; 4021), connecter le système d'énergie renouvelable raccordé au réseau (102) au bus d'alimentation principale, et désactiver le deuxième capteur.

11. Le système de la revendication 7, dans lequel, si un système d'alimentation de secours de capacité partielle est en place, l'unité de contrôle centrale (201) est configurée en outre pour déconnecter et connecter une ou plusieurs charges électriques prédéterminées à des intervalles temporels prédéterminés pour permettre à un nombre accru de charges électriques de recevoir une puissance électrique au moins.

12. Le système de la revendication 1, dans lequel au moins un PCCB (5021; 2021 ; 3021 ; 4021) comprend en outre un circuit de contrôle (5021e) en communication avec le capteur de courant (5021b) et le commutateur CA (5021a), le capteur de courant de ligne secondaire (5021b) et le circuit de contrôle (5021e) configuré pour détecter une surintensité sur la ligne secondaire électrique (103), le circuit de contrôle (5021e) étant configuré pour ouvrir le commutateur CA (5021a) lorsqu'une surintensité est détectée sur la ligne secondaire électrique (103).
